(19) Europäisches Patentamt / European Patent Office / Office européen des brevets

(11) **EP 4 563 955 A1**

(12) **EUROPEAN PATENT APPLICATION**

(43) Date of publication:
04.06.2025 Bulletin 2025/23

(21) Application number: 24191375.5

(22) Date of filing: 29.07.2024

(51) International Patent Classification (IPC):
**G01J 3/02** (2006.01)    **G01J 3/10** (2006.01)
**G01J 3/447** (2006.01)    **G01J 4/04** (2006.01)

(52) Cooperative Patent Classification (CPC):
**G01J 4/04; G01J 3/0224; G01J 3/10**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 28.11.2023 US 202318520947

(71) Applicant: **Meta Platforms Technologies, LLC
Menlo Park, CA 94025 (US)**

(72) Inventors:
• **Boutami, Salim**
  **Menlo Park (US)**
• **Akkaya, Onur Can**
  **Menlo Park (US)**
• **Omer, Khalid**
  **Menlo Park (US)**
• **McEldowney, Scott Charles**
  **Menlo Park (US)**
• **Fotopoulou, Kyriaki**
  **Menlo Park (US)**

(74) Representative: **Murgitroyd & Company
165-169 Scotland Street
Glasgow G5 8PL (GB)**

(54) **POLARIZATION MULTI-CHANNEL SENSOR WITH SPARSE POLARIZATION PIXELS**

(57) A polarization multi-channel sensor with sparse polarization pixels is described. The sensor has a plurality of macro-pixels. Each macro pixels includes a corresponding plurality of pixels configured to detect intensity of light in different color channels, and one or more polarization pixels. A polarization pixel may be configured to detect intensity of light in a same color channel that is linearly polarized to a particular orientation. In cases where there are multiple polarization pixels within a macro pixel, the polarization pixels may be configured to detect intensity of light in a same color channel, but at different orientations of linearly polarized light. Moreover, a number of polarization pixels within a macro pixel is sparse compared to a total number of pixels within the macro-pixel. The detected intensity information from the polarization pixels may be used to determine one or more properties of the object.

**FIG. 3A**

EP 4 563 955 A1

## Description

### FIELD OF THE INVENTION

This disclosure relates generally to polarization sensors, and more specifically to polarization multi-channel sensor with sparse polarization pixels.

### BACKGROUND

Polarization of light can be used to determine useful information about shape and material properties of objects. Conventional color polarization image sensors use wire grid matrix filters that cover the entire color sensor (e.g., sensor covered with a Bayer filter). This structure is non-ideal as it, e.g., reduces the light power signal (wire grid reflect ~50% of light) and it reduces resolution.

### SUMMARY

Described herein is a polarization multi-channel sensor with sparse polarization pixels (sensor). The sensor has a plurality of macro-pixels. Light from a local area that includes an object may be incident on some or all of the macro-pixels. Each macro pixels includes a corresponding plurality of pixels configured to detect intensity of light in different color channels (e.g., red, green, blue), and one or more polarization pixels. A polarization pixel may be configured to detect intensity of light in a same color channel (e.g., green) that is linearly polarized to a particular orientation. In cases where there are multiple polarization pixels within a macro pixel, the polarization pixels may be configured to detect intensity of light in a same color channel, but at different orientations of linearly polarized light. Moreover, a number of polarization pixels within a macro pixel is relatively sparse compared to a total number of pixels within the macro-pixel. A controller may use the detected intensity information from pixels that have a same color channel as that of the polarization pixels and the detected intensity information from the polarization pixels to determine one or more properties (e.g., location, shape, etc.) of the object.

According to an aspect, there is provided a sensor comprising:
a plurality of macro-pixels, where each macro pixel includes:

a plurality of pixels configured to detect intensity of light in different color channels, the plurality of pixels including a first pixel configured to detect intensity of light in a first color channel, of the different color channels, and
a first polarization pixel configured to detect intensity of light in the first color channel that is linearly polarized in a first direction,
wherein light incident on a macro-pixel, of the plurality of macro-pixels, is from an object, and a controller is configured to determine a property of the object based in part on a first intensity signal of a first pixel of the macro-pixel and a first polarization signal of a first polarization pixel of the macro-pixel.

In some embodiments, each macro-pixel further comprises:

a second polarization pixel configured to detect intensity of light in the first color channel that is linearly polarized in a second direction that is different than the first direction,
wherein the determination of the property of the object is further based in part on a second polarization signal of a second polarization pixel of the macro-pixel.

In some embodiments, an angle separating the first direction and the second direction is forty five degrees.
In some embodiments, each macro-pixel further comprises:

a third polarization pixel configured to detect intensity of light in the first color channel that is linearly polarized in a third direction, wherein an angle separating the first direction and the third direction is 67.5 degrees,
wherein the determination of the property of the object is further based in part on a third polarization signal of a third polarization pixel of the macro-pixel.

In some embodiments, the macro-pixel is sequentially illuminated with light of a first polarization and light of a second polarization that are both in the first color channel, and an angle between the light of the first polarization and the light of the second polarization is 45 degrees.
In some embodiments, a controller is configured to:

for the macro-pixel,

determine values of Stokes parameters S0, S1, and S2 using the first intensity signal, the first polarization signal, and the second polarization signal,

wherein the property of the object is based in part on the determined values.

In some embodiments, an angle separating the first direction and the second direction is 90 degrees, where each macro-pixel further comprises:

a third polarization pixel configured to detect intensity of light in the first color channel that is linearly polarized in a third direction, wherein the third direction is -45 degrees relative to the first direction; and

a fourth polarization pixel configured to detect intensity of light in the first color channel that is linearly polarized in a fourth direction, wherein the fourth direction is +45 degrees relative to the first direction;

wherein the property of the object is based in part on a third polarization signal of a third polarization pixel of the macro-pixel and a fourth polarization signal of a fourth polarization pixel of the macro-pixel.

In some embodiments, for the macro-pixel, the first polarizing pixel and the second polarizing pixel include a metasurface that directs light that is linearly polarized in the first direction to the first polarizing pixel and light that is linearly polarized in the second direction to the second polarizing pixel.

In some embodiments, the property of the object is selected from a group comprising: shape, position, and one or more material properties, where a material property is selected from a group comprising roughness, and diffuse albedo.

In some embodiments, the macro-pixel is illuminated with light of a first polarization, and a controller is configured to:

determine a degree of linear polarization (DOLP) using the first intensity signal, wherein the property of the object is further based in part on the determined DOLP.

According to another aspect, there is provided a system comprising:

a camera including a plurality of macro-pixels that receive light from a local area that includes an object, wherein a macro-pixel, of the plurality of macro-pixels includes:

a plurality of pixels configured to detect intensity of light in different color channels, the plurality of pixels including a first pixel configured to detect intensity of light in a first color channel, of the different color channels, as a first intensity signal, and

a first polarization pixel configured to detect intensity of light in the first color channel that is linearly polarized in a first direction as a first polarization signal, and

a controller configured to determine a property of the object based in part on the first intensity signal and the first polarization signal.

In some embodiments, the macro-pixel further comprises:

a second polarization pixel configured to detect intensity of light in the first color channel that is linearly polarized in a second direction that is different than the first direction,

wherein the determination of the property of the object is also based in part on a second polarization signal of a second polarization pixel of the macro-pixel.

In some embodiments, an angle separating the first direction and the second direction is 45 degrees.

In some embodiments, the macro-pixel further comprises:

a third polarization pixel configured to detect intensity of light in the first color channel that is linearly polarized in a third direction, wherein an angle separating the first direction and the third direction is 67.5 degrees,

wherein the determination of the property of the object is further based in part on a third polarization signal of a third polarization pixel of the macro-pixel.

In some embodiments, the system further comprises:

a projector configured to sequentially illuminate the object with light of a first polarization and light of a second polarization that are both in the first color channel and an angle between the light of the first polarization and the light of the second polarization is 45 degrees,

wherein a portion of the light of the first polarization and a portion of the light of the second polarization reflected by the object are incident on the macro-pixel.

In some embodiments, the controller is configured to:

for the macro-pixel,
determine values of Stokes parameters S0, S1, and S2 using the first intensity signal, the first polarization signal, and the second polarization signal,
wherein the property of the object is further based in part on the determined values.

In some embodiments, an angle separating the first direction and the second direction is 90 degrees, wherein the macro-pixel further comprises:

a third polarization pixel configured to detect intensity of light in the first color channel that is linearly polarized in a third direction, wherein the third direction is -45 degrees relative to the first direction; and
a fourth polarization pixel configured to detect intensity of light in the first color channel that is linearly polarized in a fourth direction, wherein the fourth direction is +45 degrees relative to the first direction;
wherein the property of the object is further based in part on a third polarization signal of a third polarization pixel of the macro-pixel and a fourth polarization signal of a fourth polarization pixel of the macro-pixel.

In some embodiments, the macro-pixel, the first polarizing pixel and the second polarizing pixel include a metasurface that directs light that is linearly polarized in the first direction to the first polarizing pixel and light that is linearly polarized in the second direction to the second polarizing pixel.

According to a further aspect, there is provided a sensor comprising:
a plurality of macro-pixels, where each macro pixel includes:

a plurality of pixels configured to detect intensity of light in different color channels, and
a first polarization pixel configured to detect intensity of light in a first color channel of the different color channels that is linearly polarized in a first direction,
wherein light incident on a macro-pixel, of the plurality of macro-pixels, is from an object, and a controller is configured to determine a property of the object based in part on a first polarization signal of a first polarization pixel of the macro-pixel.

In some embodiments, for the macro-pixel, the first polarizing pixel includes a metasurface that directs light that is linearly polarized in the first direction to the first polarizing pixel and light that is linearly polarized in a second direction to a second polarizing pixel.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

## BRIEF DESCRIPTION OF THE DRAWINGS

FIG. 1 is a perspective view of a headset implemented as an eyewear device, in accordance with one or more embodiments.
FIG. 2 is a block diagram of a polarization camera assembly viewing a local area, in accordance with one or more embodiments.
FIG. 3A is an example first layout of a portion of a polarization multi-channel sensor with sparse polarization pixels where each macro-pixel is configured to detect four different orientations of linearly polarized light, in accordance with one or more embodiments.
FIG. 3B is an example second layout of a portion of a polarization multi-channel sensor with sparse polarization pixels where each macro-pixel is configured to detect four different orientations of linearly polarized light, in accordance with one or more embodiments, in accordance with one or more embodiments.
FIG. 3C is an example third layout of a portion of a polarization multi-channel sensor with sparse polarization pixels where each macro-pixel is configured to detect four different orientations of linearly polarized light, in accordance with one or more embodiments, in accordance with one or more embodiments.
FIG. 4A is an example first layout of a portion of a polarization multi-channel sensor with sparse polarization pixels where each macro-pixel is configured to detect three different orientations of linearly polarized light, in accordance with one or more embodiments.

FIG. 4B is an example second layout of a portion of a polarization multi-channel sensor with sparse polarization pixels where each macro-pixel is configured to detect three different orientations of linearly polarized light, in accordance with one or more embodiments.

FIG. 4C is an example third layout of a portion of a polarization multi-channel sensor with sparse polarization pixels where each macro-pixel is configured to detect three different orientations of linearly polarized light, in accordance with one or more embodiments.

FIG. 5A is an example first layout of a portion of a polarization multi-channel sensor with sparse polarization pixels where each macro-pixel is configured to detect two different orientations of linearly polarized light, in accordance with one or more embodiments.

FIG. 5B is an example second layout of a portion of a polarization multi-channel sensor with sparse polarization pixels where each macro-pixel is configured to detect two different orientations of linearly polarized light, in accordance with one or more embodiments.

FIG. 5C is an example third layout of a portion of a polarization multi-channel sensor with sparse polarization pixels where each macro-pixel is configured to detect two different orientations of linearly polarized light, in accordance with one or more embodiments.

FIG. 6 is an example polarization system that uses a single orientation of polarized light and a polarization multi-channel sensor with sparse polarization pixels where each macro-pixel is configured to detect a single orientation of linearly polarized light, in accordance with one or more embodiments.

FIG. 7A is an example polarization system that uses two orientations of polarized light and a polarization multi-channel sensor with sparse polarization pixels where each macro-pixel is configured to detect two different orientations of linearly polarized light, in accordance with one or more embodiments.

FIG. 7B is a second layout for the sensor of FIG. 7A.

FIG. 7C is a third layout for the sensor of FIG. 7A.

FIG. 8A illustrates example operation of a metasurface directing light as a function of polarization, according to one or more embodiments.

FIG. 8B is an example first layout of a portion of a polarization multi-channel sensor with sparse polarization pixels that use metasurfaces and each macro-pixel is configured to detect four different orientations of linearly polarized light, in accordance with one or more embodiments.

FIG. 8C is an example second layout of a portion of a polarization multi-channel sensor with sparse polarization pixels that use metasurfaces and each macro-pixel is configured to detect four different orientations of linearly polarized light, in accordance with one or more embodiments.

FIG. 9 is an example layout of a portion of a polarization multi-channel sensor with sparse polarization pixels that use metasurfaces and each macro-pixel is configured to detect three different orientations of linearly polarized light, in accordance with one or more embodiments

FIG. 10A is an example first layout of a portion of a polarization multi-channel sensor with sparse polarization pixels that use metasurfaces and each macro-pixel is configured to detect two different orientations of linearly polarized light, in accordance with one or more embodiments

FIG. 10B is an example second layout of a portion of a polarization multi-channel sensor with sparse polarization pixels that use metasurfaces and each macro-pixel is configured to detect two different orientations of linearly polarized light, in accordance with one or more embodiments

FIG. 11 is a system that includes a headset, in accordance with one or more embodiments.

The figures depict various embodiments for purposes of illustration only. One skilled in the art will readily recognize from the following discussion that alternative embodiments of the structures and methods illustrated herein may be employed without departing from the principles described herein.

## DETAILED DESCRIPTION

Described herein is a polarization multi-channel sensor with sparse polarization pixels (sensor). The sensor is part of a camera of a polarization camera assembly (PCA). The sensor has a plurality of macro-pixels. Each macro pixels includes a corresponding plurality of pixels configured to detect intensity of light in different color channels (e.g., red, green, blue), and one or more polarization pixels (e.g., wire grid or metasurface). The polarization pixels of each macro-pixel may be configured to detect intensity of light in a same color channel (e.g., green) that is linearly polarized. And in cases where there are multiple polarization pixels within a macro pixel, the polarization pixels may be configured to detect intensity of light in a same color channel, but at different orientations of linearly polarized light. For example, a macro-pixel may include two polarization pixels - one configured to detect linearly polarized light at a first orientation, and the other configured to detect linearly polarized light at a second orientation where the angle between the first and second orientation is 45 degrees. A controller of the PCA may use the detected intensity information from pixels that have a same color channel as that of the polarization pixels and the detected intensity information from the polarization pixels to determine one or more properties (e.g., location, shape, etc.) of the object.

Note that a number of polarization pixels within a macro pixel is relatively sparse compared to a total number of pixels within the macro-pixel. Sparse as used herein means that no more than 50% of pixels within a macro-pixel are polarization pixels. Moreover, the green color channel typically includes the most pixels as the human eye is most sensitive to green light, and for a given macro-pixel, the polarization pixels can be in lieu of some (or in some embodiments all) of the green pixels. This sparseness in the number of polarization pixels facilitates a sensor that has a higher signal to noise ratio relative to conventional polarization sensors where all pixels are polarization pixels (i.e., automatically lose half of incident unpolarized light).

Embodiments of the invention may include or be implemented in conjunction with an artificial reality system. Artificial reality is a form of reality that has been adjusted in some manner before presentation to a user, which may include, e.g., a virtual reality (VR), an augmented reality (AR), a mixed reality (MR), a hybrid reality, or some combination and/or derivatives thereof. Artificial reality content may include completely generated content or generated content combined with captured (e.g., real-world) content. The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may also be associated with applications, products, accessories, services, or some combination thereof, that are used to create content in an artificial reality and/or are otherwise used in an artificial reality. The artificial reality system that provides the artificial reality content may be implemented on various platforms, including a wearable device (e.g., headset) connected to a host computer system, a standalone wearable device (e.g., headset), a mobile device or computing system, or any other hardware platform capable of providing artificial reality content to one or more viewers.

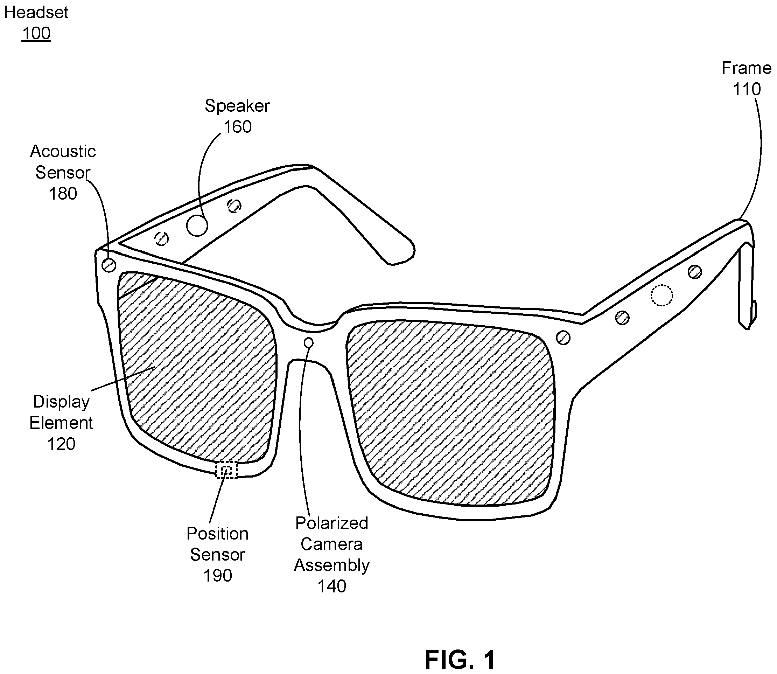

FIG. 1 is a perspective view of a headset 100 implemented as an eyewear device, in accordance with one or more embodiments. In some embodiments, the eyewear device is a near eye display (NED). In general, the headset 100 may be worn on the face of a user such that content (e.g., media content) is presented using a display assembly and/or an audio system. However, the headset 100 may also be used such that media content is presented to a user in a different manner. Examples of media content presented by the headset 100 include one or more images, video, audio, or some combination thereof. The headset 100 includes a frame and a PCA 140, and may include, among other components, a display assembly including one or more display elements 120, an audio system, and a position sensor 190. While FIG. 1 illustrates the components of the headset 100 in example locations on the headset 100, the components may be located elsewhere on the headset 100, on a peripheral device paired with the headset 100, or some combination thereof. Similarly, there may be more or fewer components on the headset 100 than what is shown in FIG. 1.

The frame 110 holds the other components of the headset 100. The frame 110 includes a front part that holds the one or more display elements 120 and end pieces (e.g., temples) to attach to a head of the user. The front part of the frame 110 bridges the top of a nose of the user. The length of the end pieces may be adjustable (e.g., adjustable temple length) to fit different users. The end pieces may also include a portion that curls behind the ear of the user (e.g., temple tip, earpiece).

The one or more display elements 120 provide light to a user wearing the headset 100. As illustrated the headset includes a display element 120 for each eye of a user. In some embodiments, a display element 120 generates image light that is provided to an eyebox of the headset 100. The eyebox is a location in space that an eye of user occupies while wearing the headset 100. For example, a display element 120 may be a waveguide display. A waveguide display includes a light source (e.g., a two-dimensional source, one or more line sources, one or more point sources, etc.) and one or more waveguides. Light from the light source is in-coupled into the one or more waveguides which outputs the light in a manner such that there is pupil replication in an eyebox of the headset 100. In-coupling and/or outcoupling of light from the one or more waveguides may be done using one or more diffraction gratings. In some embodiments, the waveguide display includes a scanning element (e.g., waveguide, mirror, etc.) that scans light from the light source as it is in-coupled into the one or more waveguides. Note that in some embodiments, one or both of the display elements 120 are opaque and do not transmit light from a local area around the headset 100. The local area is the area surrounding the headset 100. For example, the local area may be a room that a user wearing the headset 100 is inside, or the user wearing the headset 100 may be outside and the local area is an outside area. In this context, the headset 100 generates VR content. Alternatively, in some embodiments, one or both of the display elements 120 are at least partially transparent, such that light from the local area may be combined with light from the one or more display elements to produce AR and/or MR content.

In some embodiments, a display element 120 does not generate image light, and instead is a lens that transmits light from the local area to the eyebox. For example, one or both of the display elements 120 may be a lens without correction (non-prescription) or a prescription lens (e.g., single vision, bifocal and trifocal, or progressive) to help correct for defects in a user's eyesight. In some embodiments, the display element 120 may be polarized and/or tinted to protect the user's eyes from the sun.

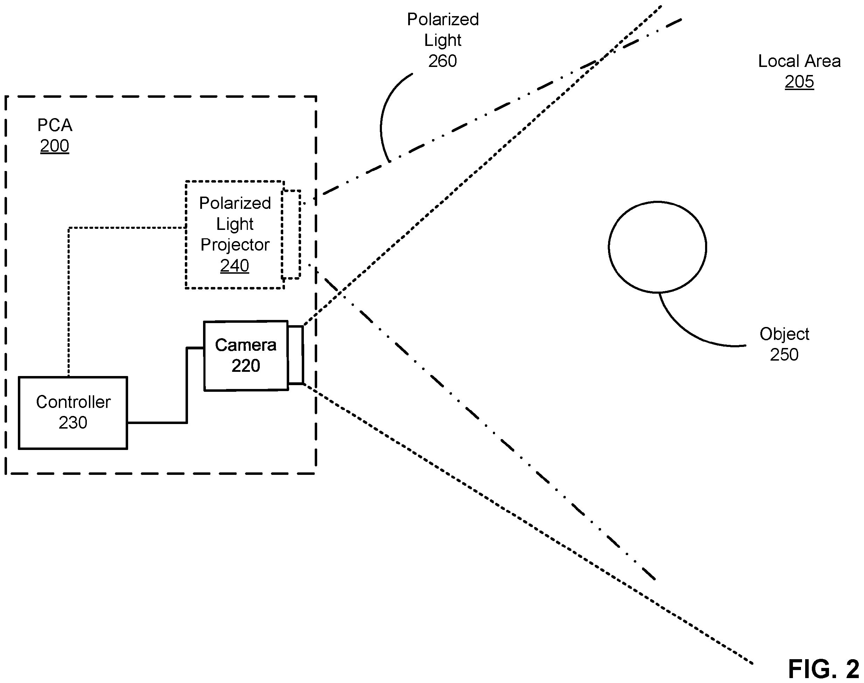

The PCA 140 determines determine one or more properties (e.g., location, shape, etc.) of objects within a local area of the PCA 140. The PCA 140 is described in detail below with regard to FIGs. 2-11.

The audio system provides audio content. The audio system includes a transducer array, a sensor array, and an audio controller. However, in other embodiments, the audio system may include different and/or additional components. Similarly, in some cases, functionality described with reference to the components of the audio system can be distributed among the components in a different manner than is described here. For example, some or all of the functions of the controller may be performed by a remote server.

The transducer array presents sound to user. The transducer array includes a plurality of transducers. A transducer may be a speaker 160 or a tissue transducer (e.g., a bone conduction transducer or a cartilage conduction transducer). Although the speakers 160 are shown exterior to the frame 110, the speakers 160 may be enclosed in the frame 110. In some embodiments, instead of individual speakers for each ear, the headset 100 includes a speaker array comprising multiple speakers integrated into the frame 110 to improve directionality of presented audio content. The tissue transducer couples to the head of the user and directly vibrates tissue (e.g., bone or cartilage) of the user to generate sound. The number and/or locations of transducers may be different from what is shown in FIG. 1.

The sensor array detects sounds within the local area of the headset 100. The sensor array includes a plurality of acoustic sensors 180. An acoustic sensor 180 captures sounds emitted from one or more sound sources in the local area (e.g., a room). Each acoustic sensor is configured to detect sound and convert the detected sound into an electronic format (analog or digital). The acoustic sensors 180 may be acoustic wave sensors, microphones, sound transducers, or similar sensors that are suitable for detecting sounds.

In some embodiments, one or more acoustic sensors 180 may be placed in an ear canal of each ear (e.g., acting as binaural microphones). In some embodiments, the acoustic sensors 180 may be placed on an exterior surface of the headset 100, placed on an interior surface of the headset 100, separate from the headset 100 (e.g., part of some other device), or some combination thereof. The number and/or locations of acoustic sensors 180 may be different from what is shown in FIG. 1. For example, the number of acoustic detection locations may be increased to increase the amount of audio information collected and the sensitivity and/or accuracy of the information. The acoustic detection locations may be oriented such that the microphone is able to detect sounds in a wide range of directions surrounding the user wearing the headset 100.

The audio controller processes information from the sensor array that describes sounds detected by the sensor array. The audio controller may comprise a processor and a computer-readable storage medium. The audio controller may be configured to generate direction of arrival (DOA) estimates, generate acoustic transfer functions (e.g., array transfer functions and/or head-related transfer functions), track the location of sound sources, form beams in the direction of sound sources, classify sound sources, generate sound filters for the speakers 160, or some combination thereof.

The position sensor 190 generates one or more measurement signals in response to motion of the headset 100. The position sensor 190 may be located on a portion of the frame 110 of the headset 100. The position sensor 190 may include an inertial measurement unit (IMU). Examples of position sensor 190 include: one or more accelerometers, one or more gyroscopes, one or more magnetometers, another suitable type of sensor that detects motion, a type of sensor used for error correction of the IMU, or some combination thereof. The position sensor 190 may be located external to the IMU, internal to the IMU, or some combination thereof.

In some embodiments, the headset 100 may provide for simultaneous localization and mapping (SLAM) for a position of the headset 100 and updating of a model of the local area. For example, the headset 100 may include a passive camera assembly that generates color image data. The passive camera assembly may include one or more RGB cameras that capture images of some or all of the local area. The images captured by the PCA and the location information determined by the PCA 140 may be used to determine parameters of the local area, generate a model of the local area, update a model of the local area, or some combination thereof. Furthermore, the position sensor 190 tracks the position (e.g., location and pose) of the headset 100 within the room. Additional details regarding the components of the headset 100 are discussed below in connection with FIG 12.

FIG. 2 is a block diagram of a PCA 200 viewing a local area 205, in accordance with one or more embodiments. The PCA 140 is an embodiment of the PCA 200. In the embodiment of FIG. 2, the PCA 200 includes a camera 220, a controller 230, and in some embodiments, also includes a polarized light projector 240. Some embodiments of the PCA 200 have different components than those described here. Similarly, in some cases, functions can be distributed among the components in a different manner than is described here.

The camera 220 detects light from the local area 205. The camera 220 includes a polarization multi-channel sensor with sparse polarization pixels ("sensor"), and may include one or more optical elements (e.g., lenses). The one or more optical elements may, e.g., focus light from the local area 205 onto the sensor.

The sensor detects intensity information of light from the local area 205. The sensor includes a plurality of macro-pixels. Each macro pixels includes a corresponding plurality of pixels configured to detect intensity of light in different color channels and one or more polarization pixels. The color channels may be, e.g., red, green, and blue. In other embodiments the color channels may include some other color and/or correspond to some other combination of colors.

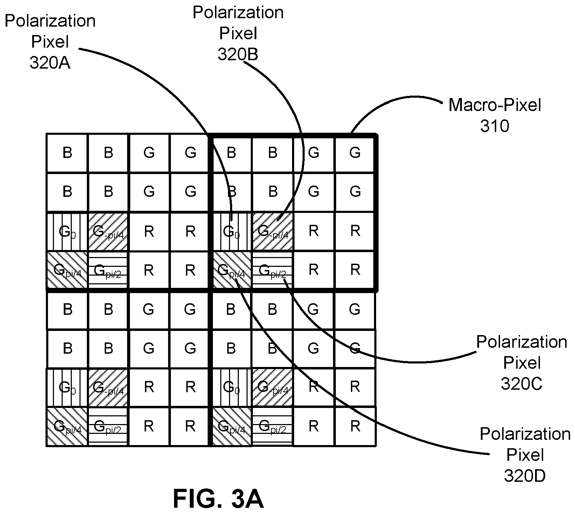

The one or more polarization pixels of each macro-pixel are configured to detect intensity of light in a same color channel that is linearly polarized. For example, in some embodiments, the one or more polarization pixels of each macro-pixel are configured to detect intensity of green light that is linear polarized. In embodiments, where there are multiple polarization pixels within a macro pixel, the polarization pixels may be configured to detect intensity of light in a same color channel, but at different orientations of linearly polarized light. For a given sensor layout, the orientations of linear polarized light detected by the one or more polarization pixels of each macro-pixel are the same. The sensor may have different layouts, e.g., linear polarization pixels configured to detect two detect 2, 3, or 4 different orientations of linearly polarized light. Examples of the various layouts are described below with regard to, e.g., FIGs. 3A-10B. A polarization pixel is a pixel of a particular color channel that is overlaid with a means for linear polarizer. The linear polarizer may be, e.g., a wire grid, a metasurface.

The polarized light projector 240 outputs linearly polarized light. The polarized light projector 240 includes one or more illuminators that emit linear polarized light. In some embodiments, the one or more illuminators emit linearly polarized light at a single orientation (e.g., 0 degrees) that is the same for all of the one or more illuminators - and is aligned 90 degrees relative to polarization pixels on the camera 220. In other embodiments, the polarized light projector 240 emits, in a time multiplexed and/or sequential manner, linearly polarized light at a first orientation (0 degrees) and is aligned 90 degrees relative to some polarization pixels on the camera 220, and linear polarized light at a second orientation (e.g., 45 degrees) is aligned 90 degrees relative to some polarization pixels on the camera 220. The polarized light projector 240 may include a first illuminator that emits light at the first orientation and a second illuminator that emits light at the second orientation. In other embodiments, a single illuminator can emit linearly polarized light in different orientations at different respective times.

The controller 230 determines determine one or more properties of objects (e.g., object 250) within the local area 205 of the PCA 140. A property of the object may be, e.g., shape, position, one or more material properties (e.g., roughness, diffuse albedo, etc.), or some combination thereof. How the controller 230 process information from the sensor and/or controls the polarized light projector 240 to determine the one or more properties of the object is based in part on the specific sensor layout, and is discussed below with regard to, e.g., FIGs 3A-10B.

FIG. 3A is an example first layout of a portion of a polarization multi-channel sensor with sparse polarization pixels where each macro-pixel is configured to detect four different orientations of linearly polarized light, in accordance with one or more embodiments. The portion of the sensor illustrated includes four macro-pixels (e.g., macro-pixel 310) that have a same layout of pixels and polarization pixels. For example, the macro-pixel 310 includes a plurality of pixels configured to detect intensity of light in different color channels (e.g., red, green, and blue), and polarization pixels 320A, 320B, 320C, and 320D (collectively referred to as polarization pixels 320). The polarization pixel 320A is configured to detect intensity of light in the green color channel that is linearly polarized in a first direction (0 degrees). The polarization pixel 320B is configured to detect intensity of light in the green color channel that is linearly polarized in a second direction ($-\pi/4$ or -45 degrees). The polarization pixel 320C is configured to detect intensity of light in the green color channel that is linearly polarized in a third direction ($\pi/2$ or 90 degrees). The polarization pixel 320D is configured to detect intensity of light in the green color channel that is linearly polarized in a fourth direction ($\pi/4$ or 45 degrees). As illustrated, the respective directions are shown in the figure in the subscripts of the polarization pixels.

A controller (e.g., the controller 230) may determine the $S_0$, $S_1$, and $S_2$ Stokes parameters using the detected intensities from the polarization pixels 320. $S_0$ is a Stokes parameter that refers to a total intensity of light. $S_1$ is a Stokes parameter that refers to a horizontal v. vertical preference in linear polarization, e.g., a difference between the amount of light polarized along 0 degrees and the amount of light polarized at 90 degrees. $S_2$ is a Stokes parameter that refers to a diagonal v. antidiagonal preference in linear polarization, e.g., difference between an amount of light polarized along 45 degrees and an amount of light polarized along -45 degrees. The controller may determine the $S_0$, $S_1$, and $S_2$ via:

$$S_0 = \frac{A_{G0} + A_{G\pi/2} + A_{G\pi/4} + A_{G-\pi/4}}{2} = A_G \tag{1}$$

$$S_1 = A_{G0} - A_{G\pi/2} \tag{2}$$

$$S_2 = A_{G\pi/4} - A_{G-\pi/4} \tag{3}$$

Where $A_{G0}$ is detected intensity (i.e., absorption) at the polarization pixel 320A, $A_{G-\pi/4}$ is detected intensity at the polarization pixel 320B, $A_{G\pi/2}$ is detected intensity at the polarization pixel 320C, $A_{G\pi/4}$ is detected intensity at the polarization pixel 320D, and $A_G$ is detected intensity (i.e., absorption) at a green pixel in the macro-pixel 310 that is non-polarizing (i.e., not one of the polarization pixels 320). In this example, $A_G$ is available in four different pixels in each macro-pixel. In some embodiments, $A_G$ is determined based on a value of closest $A_G$ pixels (e.g., via interpolation). The controller may use the Stokes parameters with other factors (e.g., shape) to solve for a material property using methods found in the art.

Note using the layout of FIG. 3A, the detected intensity of green pixels (i.e., non-polarizing) is not needed to determine $S_0$. However, it can still be used to maintain a green quantum efficiency (QE) that is higher than the other color channels (red and blue). As such, sensor is able to provide intensity information for the polarization pixels as if they were not present. Moreover, the redundant means of obtaining $A_G$ are useful for interpolation purposes on the matrix. This is much improved over conventional polarization sensors that cover all pixels of the sensor (may lose about half the incident signal over all color channels).

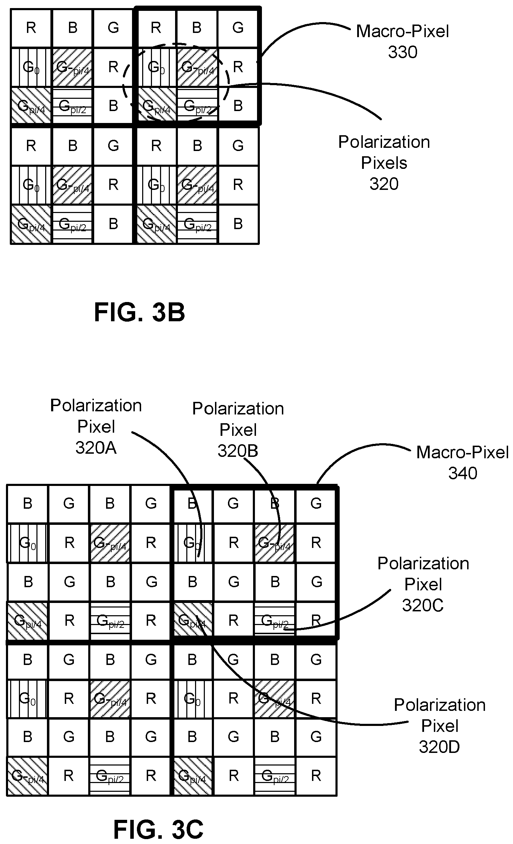

FIG. 3B is an example second layout of a portion of a polarization multi-channel sensor with sparse polarization pixels where each macro-pixel is configured to detect four different orientations of linearly polarized light, in accordance with one or more embodiments, in accordance with one or more embodiments. The portion of the sensor illustrated is substantially the same as that in FIG. 3A (e.g., in the inclusion of the polarization pixels 320), except that each macro-pixel (e.g., macro-pixel 330) includes a fewer number of pixels configured to detect intensity of light in different color channels (e.g., red, green, and blue). The controller (e.g., the controller 230) may determine the $S_0$, $S_1$, and $S_2$ Stokes parameters using equations (1) - (3) as described above.

FIG. 3C is an example third layout of a portion of a polarization multi-channel sensor with sparse polarization pixels where each macro-pixel is configured to detect four different orientations of linearly polarized light, in accordance with one or more embodiments, in accordance with one or more embodiments. The portion of the sensor illustrated is substantially the same as that in FIG. 3A, except that each macro-pixel (e.g., macro-pixel 340) includes polarization pixels 320A, 320B, 320C, 320D that are separated from each other via at least one non-polarizing pixel. The controller (e.g., the controller 230) may determine the So, $S_1$, and $S_2$ Stokes parameters using equations (1) - (3) as described above.

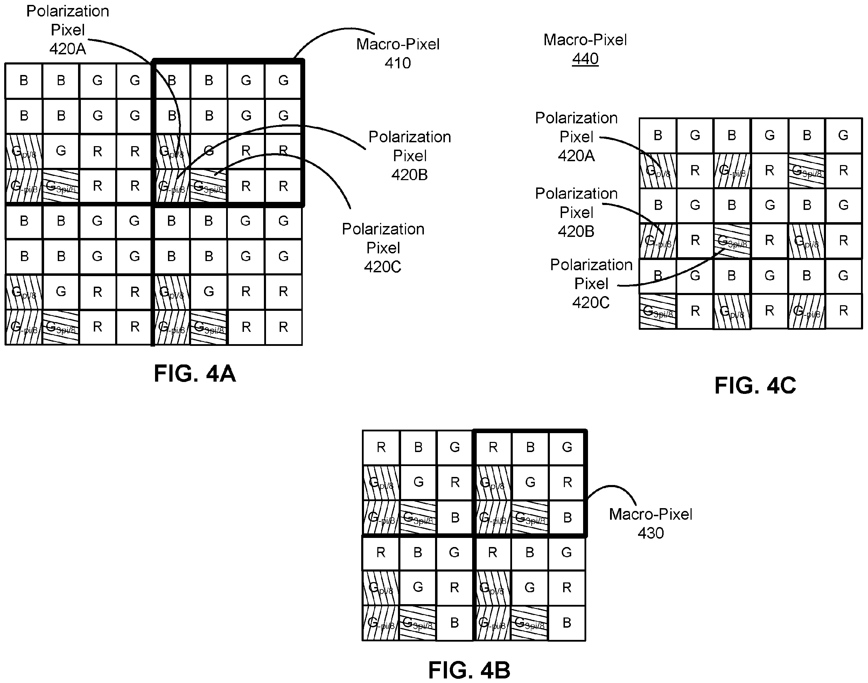

FIG. 4A is an example first layout of a portion of a polarization multi-channel sensor with sparse polarization pixels where each macro-pixel is configured to detect three different orientations of linearly polarized light, in accordance with one or more embodiments. The portion of the sensor illustrated includes four macro-pixels (e.g., macro-pixel 410) that have a same layout of pixels and polarization pixels. For example, the macro-pixel 410 includes a plurality of pixels configured to detect intensity of light in different color channels (e.g., red, green, and blue), and polarization pixels 420A,4320B, and 420D (collectively referred to as polarization pixels 420). The polarization pixel 420A is configured to detect intensity of light in the green color channel that is linearly polarized in a first direction ($\pi/8$ or 22.5 degrees). The polarization pixel 420B is configured to detect intensity of light in the green color channel that is linearly polarized in a second direction ($-\pi/8$ or -22.5 degrees). The polarization pixel 420C is configured to detect intensity of light in the green color channel that is linearly polarized in a third direction ($3\pi/8$ or 67.5 degrees). As illustrated, the respective directions are shown in the figure in the subscripts of the polarization pixels.

A controller (e.g., the controller 230) may determine the $S_0$, $S_1$, and $S_2$ Stokes parameters using the detected intensities from the polarization pixels 420. The controller may determine the $S_0$, $S_1$, and $S_2$ via:

$$S_0 = A_G = A_{G-\pi/8} + A_{G3\pi/8} \qquad (4)$$

$$S_1 = \sqrt{2}\left(A_{G\pi/8} + A_{G-\pi/8} - A_G\right) \qquad (5)$$

$$S_2 = \sqrt{2}\left(A_{G\pi/8} + A_{G3\pi/8} - A_G\right) \qquad (6)$$

Where $A_{G\pi/8}$ is detected intensity at the polarization pixel 420A, $A_{G-\pi/8}$ is detected intensity at the polarization pixel 420B, and $A_{G3\pi/8}$ is detected intensity at the polarization pixel 420C. The controller can then use the Stokes parameters to solve for a material property using methods found in the art.

Note using the layout of FIG. 4A, the detected intensity of green pixels (i.e., non-polarizing) is not needed to determine $S_0$, as the detected intensity can be determined via equation 4. However, it can still be used to maintain a green QE that is higher than the other color channels (red and blue). As such, sensor is able to provide intensity information for the polarization pixels as if they were not present. Moreover, the redundant means of obtaining $A_G$ are useful for interpolation purposes on the matrix. This is much improved over conventional polarization sensors that cover all pixels of the sensor (may lose about half the incident signal over all color channels).

FIG. 4B is an example second layout of a portion of a polarization multi-channel sensor with sparse polarization pixels where each macro-pixel is configured to detect three different orientations of linearly polarized light, in accordance with one or more embodiments. The portion of the sensor illustrated is substantially the same as that in FIG. 4A (e.g., in the inclusion of the polarization pixels 420), except that each macro-pixel includes a fewer number of pixels configured to detect intensity of light in different color channels (e.g., red, green, and blue). The controller (e.g., the controller 230) may determine the $S_0$, $S_1$, and $S_2$ Stokes parameters using equations (4) - (6) as described above.

FIG. 4C is an example third layout of a portion of a polarization multi-channel sensor with sparse polarization pixels where each macro-pixel is configured to detect three different orientations of linearly polarized light, in accordance with one or more embodiments. In this layout, the illustrated portion of the sensor is a single macro-pixel 440. The portion of the sensor illustrated is substantially the same as that in FIG. 3A, except that each of the polarization pixels 420A, 420B, 420C that are separated from each other via at least one non-polarizing pixel and only a single macro-pixel is shown (i.e., the macro-pixel 440). The controller (e.g., the controller 230) may determine the $S_0$, $S_1$, and $S_2$ Stokes parameters using equations (4) - (6) as described above.

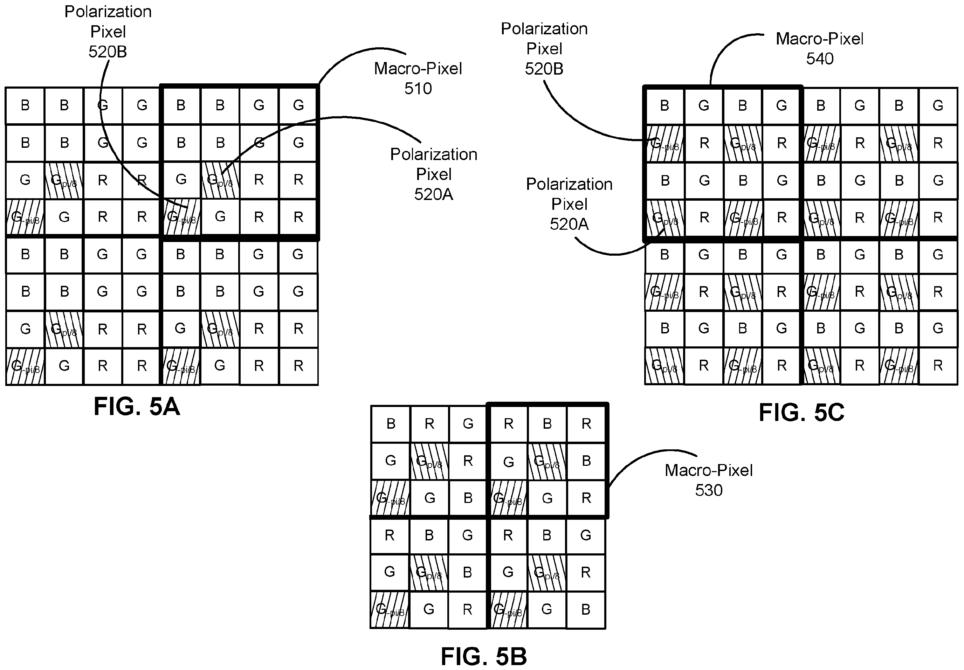

FIG. 5A is an example first layout of a portion of a polarization multi-channel sensor with sparse polarization pixels where each macro-pixel is configured to detect two different orientations of linearly polarized light, in accordance with one or more embodiments. The portion of the sensor illustrated includes four macro-pixels (e.g., macro-pixel 510) that have a same layout of pixels and polarization pixels. For example, the macro-pixel 510 includes a plurality of pixels configured to detect intensity of light in different color channels (e.g., red, green, and blue), and polarization pixels 520A and 520B (collectively referred to as polarization pixels 520). The polarization pixel 520A is configured to detect intensity of light in the green color channel that is linearly polarized in a first direction ($\pi/8$ or 22.5 degrees). The polarization pixel 520B is configured to detect intensity of light in the green color channel that is linearly polarized in a second direction (-$\pi/8$ or -22.5 degrees). As illustrated, the respective directions are shown in the figure in the subscripts of the polarization pixels.

A controller (e.g., the controller 230) may determine the $S_0$, $S_1$, and $S_2$ Stokes parameters using the detected intensities from the polarization pixels 420. The controller may determine the $S_0$, $S_1$, and $S_2$ via:

$$S_0 = A_G \tag{7}$$

$$S_1 = \sqrt{2}(A_{G\pi/8} + A_{G-\pi/8} - A_G) \tag{8}$$

$$S_2 = \sqrt{2}(A_{G\pi/8} + A_{G-\pi/8}) \tag{9}$$

Where $A_{G\pi/8}$ is detected intensity at the polarization pixel 520A, and $A_{G-\pi/8}$ is detected intensity at the polarization pixel 520B. The controller can then use the determined Stokes parameters to solve for a material property using methods found in the art.

FIG. 5B is an example second layout of a portion of a polarization multi-channel sensor with sparse polarization pixels where each macro-pixel is configured to detect two different orientations of linearly polarized light, in accordance with one or more embodiments. The portion of the sensor illustrated is substantially the same as that in FIG. 5A (e.g., in the inclusion of the polarization pixels 520), except that each macro-pixel includes a fewer number of pixels configured to detect intensity of light in different color channels (e.g., red, green, and blue). The controller (e.g., the controller 230) may determine the $S_0$, $S_1$, and $S_2$ Stokes parameters using equations (7) - (9) as described above.

FIG. 5C is an example third layout of a portion of a polarization multi-channel sensor with sparse polarization pixels where each macro-pixel is configured to detect two different orientations of linearly polarized light, in accordance with one or more embodiments. The portion of the sensor illustrated is substantially the same as that in FIG. 5A, except that each macro-pixel (e.g., macro-pixel 540) includes two polarization pixels 520A and two polarization pixels 520B, that are separated from each other via at least one non-polarizing pixel. The controller (e.g., the controller 230) may determine the $S_0$, $S_1$, and $S_2$ Stokes parameters using equations (7) - (9) as described above.

Note that in each of the figures 3A-5C specific orientations of the polarization pixels are used. These orientations can be rotated by a common offset, such that for a given layout the relative differences of the orientations of the polarization pixels are maintained. Moreover, the layouts described above can be used to determine $S_0$, $S_1$, and $S_2$, such that they can be used with other factors (e.g., shape) to determine all material properties. Note that the layouts described above with reference to figures 3A-5C do not use a polarized light projector (e.g., the polarized light projector 240) - and instead just use detected light intensities (in a single color channel) at the sensor of the camera to the determine Stokes parameters which can then be used to determine material properties of objects in the local area.

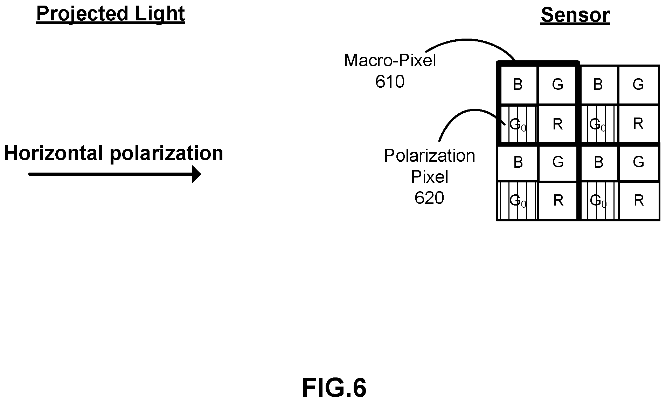

In other embodiments, the PCA uses both the camera and the polarized light projector to determine material properties of an object. These embodiments are based in part on properties associated with diffuse reflection and specular reflection. Specular reflection occurs at a surface - e.g., on microfacets along a surface of an object. While a total amount of specular reflection is not meant to vary, it is angularly distributed as a function of roughness. Roughness is the main material property affecting specular reflection, through a distribution function. The distribution function describes the density of facets as a function of their zenith angle with respect to surface normal. The specificity of specular reflection is that it fully maintains the polarization of the source after reflection, so it is fully polarized if the source is polarized, with the same orientation angle, for whatever position on the object. In contrast, for diffuse reflection is a result of some amount of light getting transmitted into the object and then is back scattered, appearing as reflected light. This amount of retroreflection is called diffuse albedo (between 0 and 1). This diffuse light is depolarized inside the object, therefore it can only acquire polarization by transmission back through the air-object interface. This transmission happens to be fully unpolarized for directions normal to the surface normal. FIGs. 6-7C describe embodiments of the PCA that use the polarized light projector to determine different material properties of an object.

FIG. 6 is an example polarization system that uses a single orientation of polarized light and a polarization multi-channel sensor with sparse polarization pixels where each macro-pixel is configured to detect a single orientation of linearly polarized light, in accordance with one or more embodiments. The portion of the sensor illustrated includes four macro-pixels (e.g., macro-pixel 610) that have a same layout of pixels and polarization pixels. For example, the macro-pixel 610 includes a plurality of pixels configured to detect intensity of light in different color channels (e.g., red, green, and blue), and a polarization pixel 620. The polarization pixel 620 is configured to detect intensity of light in the green color channel that is linearly polarized in a first direction (0 degrees). The sensor is integrated into a camera (e.g., the camera 220) of a PCA (e.g., the PCA 200) that also includes a polarized light projector (e.g., the polarized light projector 240). The polarized light projector is configured to emit light that is linearly polarized in a second direction (e.g., horizontal) that is orthogonal to the first direction.

A controller (e.g., the controller 230) instructs the polarized light projector to illuminate a local area with polarized light. Portions of the polarized light are reflected and/or scattered off of objects within the local area and are incident on the sensor.

The control may be configured to determine a degree of linear polarization for the second direction for a given macro-pixel (e.g., 610) via:

$$DOLP_{Horizontal} = \frac{S_{0-sp} + S_{1-diff}}{S_0} = \frac{2A_{G0} - A_G}{A_G} \tag{10}$$

Where, $A_G = S_0 = S_{0-sp} + S_{0-diff}$, $S_{0-sp}$ is the specular component of $S_0$, $S_{0-djyy}$ is the diffuse component of $S_0$, and $A_{G0}$ is the intensity detected by the polarization pixel (e.g., 620) of the macro-pixel

$$A_{G0} = S_{0-sp} + \frac{S_{0-diff}}{2} + \frac{S_{1-diff}}{2} \tag{11}$$

The control may be configured to determine a degree of linear polarization at highlight ("DOLP_highlight") for the given macro-pixel (e.g., 610) via:

$$DOLP_{highlight} = \frac{S_{0-sp}}{S_0} = \frac{2A_{G0} - A_G}{A_G} \tag{12}$$

The $DOLP_{highlight}$ refers to the degree of linear polarization at maximal irradiance (characterized by the fact that the viewing direction is perfectly orthogonal to a surface normal of the object) The controller uses the $DOLP_{Horizontal}$ values to determine material properties like, e.g., roughness and/or diffuse albedo, and So can be used to determine object position.

The $DOLP_{highlight}$ (equals to horizontal DOLP), is the ratio of specular irradiance to full irradiance (partial specular irradiance), and gives information on the ratio of the diffuse albedo ("wdiff") to a peak of a distribution function D0 (Distribution function at angle origin). The ratio of diffuse albedo to peak of the Distribution function may be found via:

$$\frac{w_{diff}}{D_0} = \left(\frac{1 - DOLP_{highlight}}{DOLP_{highlight}}\right) \frac{(n^2 - 1)^2}{64n^2} \tag{13}$$

Where n is the refractive index (e.g., 1.5). The distribution function can be found either from: highlight sharpness, or a minimum of $DOLP_{Horizontal}$ near the highlight. For example, the minimum of $DOLP_{Horizontal}$ may be found via:

$$\frac{DOLP_{highlight} * \frac{D\alpha_{min}}{D_0 \cos(\alpha_{min})} + (1 - DOLP_{highlight}) \cos(\alpha_{min}) \frac{2T_P(\alpha_{min})[T_S(\alpha_{min}) + T_P(\alpha_{min})]}{[T_S(0) + T_P(0)]^2} DOLP_{diff}}{DOLP_{highlight} * \frac{D\alpha_{min}}{D_0 \cos(\alpha_{min})} + (1 - DOLP_{highlight}) \cos(\alpha_{min}) \frac{2T_P(\alpha_{min})[T_S(\alpha_{min}) + T_P(\alpha_{min})]}{[T_S(0) + T_P(0)]^2}} \tag{14}$$

$$T_S(\alpha) = \frac{4 \cos \alpha \sqrt{n^2 - sin^2 \alpha}}{1 + n^2 - 2sin^2 \alpha + 2 \cos \alpha \sqrt{n^2 - sin^2 \alpha}} \tag{15}$$

$$T_P(\alpha) = \frac{4\cos\alpha\sqrt{n^2-\sin^2\alpha}}{1+n^2-(n^2+\frac{1}{n^2})\sin^2\alpha+2\cos\alpha\sqrt{n^2-\sin^2\alpha}} \qquad (16)$$

$$DOLP_{diff}(\alpha) = \frac{(n^2-1)^2\sin^2\alpha}{2n^2+2n^4+4n^2\cos\alpha\sqrt{n^2-\sin^2\alpha}-(n^2+1)^2\sin^2\alpha} \qquad (17)$$

Where $\alpha$ is angle and $\alpha_{min}$ is angle at which the corresponding function is a minimum. Using equations 13 and 14 above, the controller may determine the Distribution function (e.g., describes object roughness) and the diffuse albedo for the color channel the polarization pixels are in (e.g., green). The controller may then determine the diffuse albedo for other color channels (e.g., blue and/or red) based on the relative intensity of the other color channels with respect to the color channel the polarization pixels are in.

The controller can determine object position based in part on the determined material properties and detected intensity. For example, a distance ("$d_{high}$") to the object may be calculated via:

$$d_{high} = \sqrt{\frac{I_{light}}{S_{0-highlight}} * \left(\frac{D_0(n^2-1)^2+64w_{diff}n^2}{4(n^2+1)^4}\right)} \qquad (18)$$

Where $S_{0-highlight}$ is $S_0$ Stokes parameter at the highlight, $I_{light}$ is source power (e.g., power of light emitted by the polarized light projector 240). Accordingly, the controller is able to determine roughness, diffuse albedo, and position using the equations shown above.

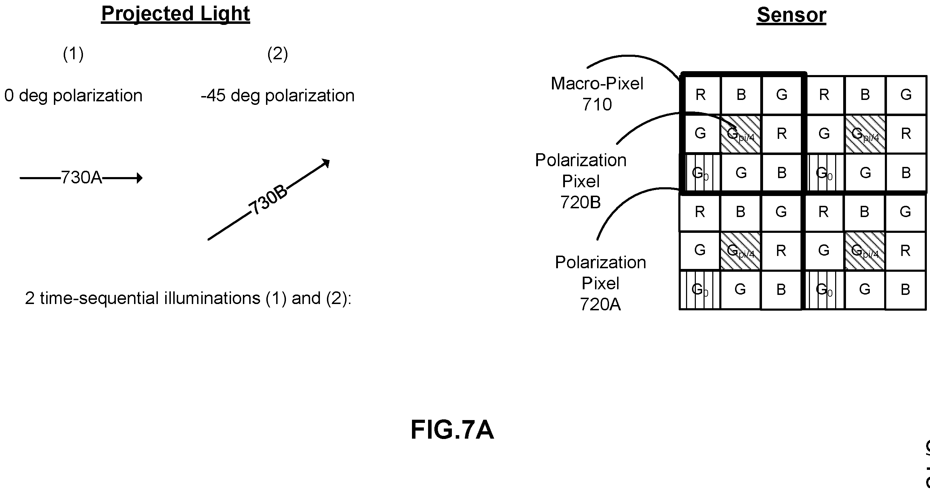

FIG. 7A is an example polarization system that uses two orientations of polarized light and a polarization multi-channel sensor with sparse polarization pixels where each macro-pixel is configured to detect two different orientations of linearly polarized light, in accordance with one or more embodiments. The portion of the sensor illustrated includes four macro-pixels (e.g., macro-pixel 710) that have a same layout of pixels and polarization pixels. For example, the macro-pixel 710 includes a plurality of pixels configured to detect intensity of light in different color channels (e.g., red, green, and blue), and polarization pixels 720A and 720B (collectively referred to as polarization pixels 720). The polarization pixel 720A is configured to detect intensity of light in the green color channel that is linearly polarized in a first direction (0 degrees). The polarization pixel 720B is configured to detect intensity of light in the green color channel that is linearly polarized in a second direction ($\pi/4$ or 45 degrees). The sensor is integrated into a camera (e.g., the camera 220) of a PCA (e.g., the PCA 200) that also includes a polarized light projector (e.g., the polarized light projector 240). The polarized light projector is configured to emit light 730A that is linearly polarized in a direction (e.g., horizontal) that is orthogonal to the first direction and light 730B that is linearly polarized in a direction (e.g., -45 degrees) that is orthogonal to the second direction during different respective time periods (e.g., time multiplexed and/or sequential manner).

The controller of the PCA may determine, e.g., using the equations describe above, object position and material properties. The embodiments described in FIGs. 7A-7C can reconstruct object shape by extracting the diffuse part of the light. The diffuse portions of light are described via the Stokes parameters and are referred to as, $SO_{-diff}$, $S_{1-diff}$, and $S_{2-diff}$. The diffuse components include shape information for objects. The controller may fully extract the diffuse components that contain shape information, for a given macro pixel (e.g., the macro-pixel 710) via:

$$S_{0-diff} = 2A_G^{(2)} - 2A_0^{(1)} + 2A_0^{(2)} - A_G^{(2)} = 2A_G^{(2)} - 2A_{G\pi/4}^{(2)} + 2A_{G\pi/4}^{(1)} - A_G^{(1)} \qquad (19)$$

$$S_{1-diff} = 2A_{G0}^{(2)} - A_G^{(2)} \qquad (20)$$

$$S_{2-diff} = 2A_{G\pi/4}^{(2)} - A_G^{(1)} \qquad (21)$$

Where the superscript (1) refers to a time period in which the sensor captures light 730A reflected from objects in the local area, and the superscript (2) refers to a time period in which the sensor captures light 730B reflected from objects in the local area. As such, $A_G^{(1)}$ is detected intensity of 730A at a green pixel (non-polarized), $A_G^{(2)}$ is detected intensity of 730B at the green pixel (non-polarized), $A_{G0}^{(2)}$ is detected intensity of the light 730B at the polarization pixel (e.g., 720A),

$A_{G\pi/4}^{(1)}$ is detected intensity of the light 730A at the polarization pixel (e.g., 720B), and $A_{G\pi/4}^{(2)}$ is detected intensity of the light 730B at the polarization pixel (e.g., 720B).

Once these diffuse components are extracted, the controller may determine one or more surface normals orientation (i.e., shape) for the object. The controller may make the determination using one or more methods known in the art.

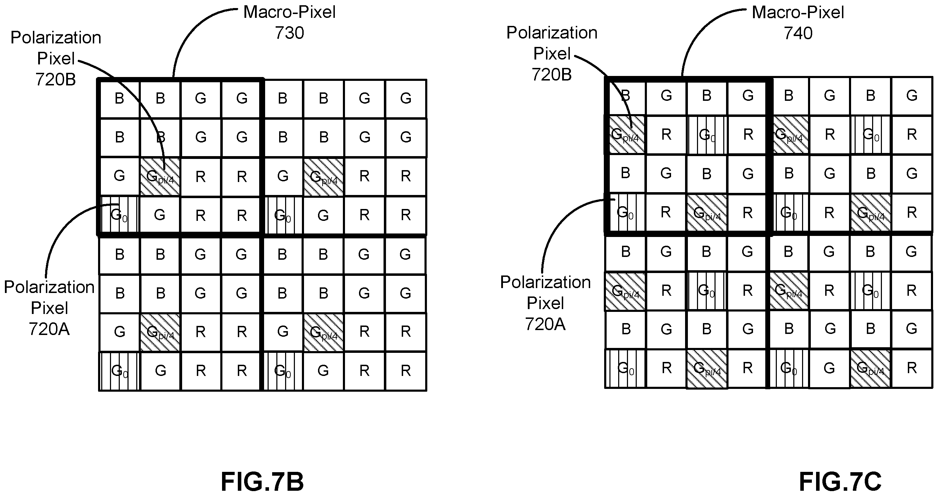

FIG. 7B is a second layout for the sensor of FIG. 7A. The portion of the sensor illustrated is substantially the same as that in FIG. 7A (e.g., in the inclusion of the polarization pixels 720), except that each macro-pixel includes a larger number of pixels configured to detect intensity of light in different color channels (e.g., red, green, and blue). The controller (e.g., the controller 230) may determine material properties, location, and shape using the equations described above with reference to, e.g., FIGs. 6 and 7A.

FIG. 7C is a third layout for the sensor of FIG. 7A. The portion of the sensor illustrated is substantially the same as that in FIG. 7A, except that each macro-pixel (e.g., macro-pixel 740) includes two polarization pixels 720A and two polarization pixels 720B, that are separated from each other via at least one non-polarizing pixel. The controller (e.g., the controller 230) may determine material properties, location, and shape using the equations described above with reference to, e.g., FIGs. 6 and 7A.

Note that in each of the figures 6-7C specific orientations of the polarization pixels are used. These orientations can be rotated by a common offset, such that for a given layout the relative differences of the orientations of the polarization pixels are maintained. Moreover, the various sensor layouts provide different tradeoffs. For example, the portion of the sensor illustrated in FIG. 7A has much fewer pixels in each macro-pixel relative to the portion of the sensors illustrated in FIGs. 7B and 7C. As such - it may be simpler to implement, have a lower power budget, etc., that the embodiments described in FIGs. 7B and 7C, at an expense of lower resolution.

Whereas all the invention was described with wire grid polarization filters, there is another kind of components that can be used, the metasurface polarization routers. These metasurfaces are generally dielectric (whereas wire grids are metallic) and are able to route light as a function of its polarization state to the correct pixel. This further reduces the photon loss compared to wire grids.

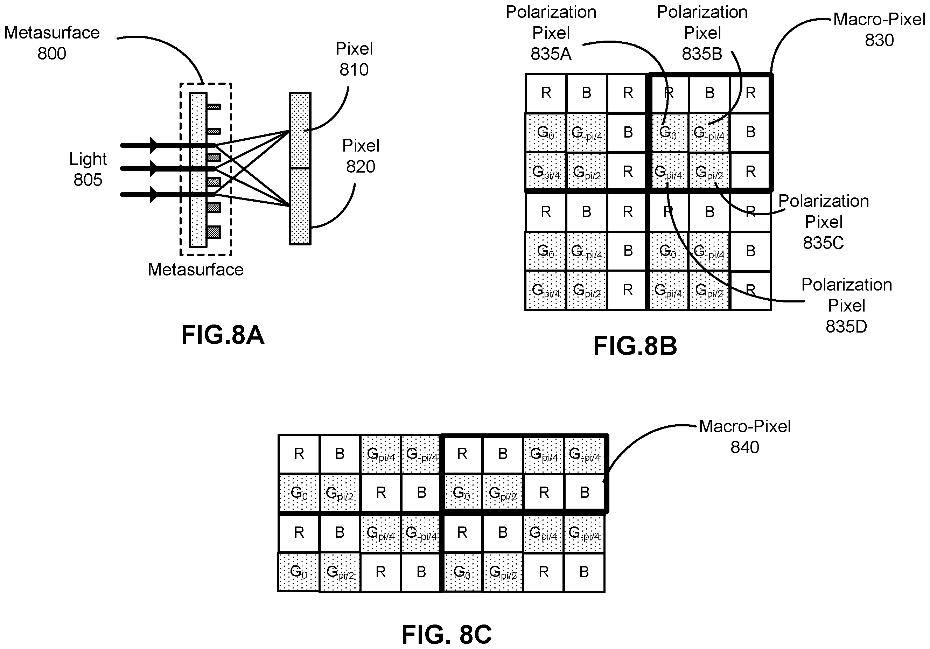

FIG. 8A illustrates example operation of a metasurface 800 directing light as a function of polarization, according to one or more embodiments. A metasurface includes a plurality of surface features (e.g., nanopatterned structures of sub-wavelength thickness) that are tailored to direct light in different directions as a function of their polarization. In this manner a metasurface can direct light a first linear polarization to a first pixel, light of a second linear polarization to a different pixel, and so on. The light will totally split if the angles are orthogonal, it will not totally split otherwise (as for wire grids, the perfect extinction is only obtained for orthogonal polarization angle).

For example, as shown in FIG. 8A light 805 is incident on the metasurface 800. The light 805 is unpolarized light. As shown the metasurface 800 is configured to direct portions of the light 805 that have a first linear polarization to a pixel 810, and to direct portions of the light 805 that have a second linear polarization that is orthogonal to the first linear polarization to a pixel 820. Note that, the metasurface has negligible absorption and/or reflection of the light 805. In contrast, a wire-grid polarizer would lose about 50 percent of incident light (e.g., through reflection or absorption depending on the type of wire-grid polarizer). As such, a multi-channel color sensor can use a metasurface to obtain polarized information for a specific color channel without also having non-polarizing pixels for that color channel.

FIG. 8B is an example first layout of a portion of a polarization multi-channel sensor with sparse polarization pixels that use metasurfaces and each macro-pixel is configured to detect four different orientations of linearly polarized light, in accordance with one or more embodiments. The portion of the sensor illustrated includes four macro-pixels (e.g., macro-pixel 830) that have a same layout of pixels and polarization pixels. For example, the macro-pixel 830 includes a plurality of pixels configured to detect intensity of light in different color channels (e.g., red and blue), and polarization pixels 835A, 835B, 835C, and 835D (collectively referred to as polarization pixels 835) that include a metasurface. The metasurface of the polarization pixels 835 functions to direct incident light to different polarization pixels based as a function of the polarization of the incident light. The polarization pixel 835A is configured to detect intensity of light in the green color channel that is linearly polarized in a first direction (0 degrees). The polarization pixel 835B is configured to detect intensity of light in the green color channel that is linearly polarized in a second direction ($-\pi/4$ or -45 degrees). The polarization pixel 835C is configured to detect intensity of light in the green color channel that is linearly polarized in a third direction ($\pi/2$ or 90 degrees). The polarization pixel 835D is configured to detect intensity of light in the green color channel that is linearly polarized in a fourth direction ($\pi/4$ or 45 degrees). Note that the macro-pixel 830 does not include any non-polarized green pixels. This is because, as noted above with reference to FIG. 8A, the metasurface does not absorb/reflect a significant amount of incident light (e.g., relative to a wire-grid polarizer), as such, intensity value equivalent to a non-polarized green pixel may be easily obtained from the intensity values of the polarization pixels 835. A controller (e.g., the controller 230) may use the detected intensities to determine a property of an object in the same manner as described above with reference to, e.g., FIG. 3A.

FIG. 8C is an example second layout of a portion of a polarization multi-channel sensor with sparse polarization pixels that use metasurfaces and each macro-pixel is configured to detect four different orientations of linearly polarized light, in accordance with one or more embodiments. The portion of the sensor illustrated is substantially the same as that in FIG. 8B (e.g., in the inclusion of the polarization pixels 835), except that each macro-pixel (e.g., macro-pixel 840) includes a fewer number of pixels configured to detect intensity of light in different color channels (e.g., red and blue). The controller (e.g., the controller 230) may use the detected intensities to determine a property of an object in the same manner as described above with reference to, e.g., FIG. 3A.

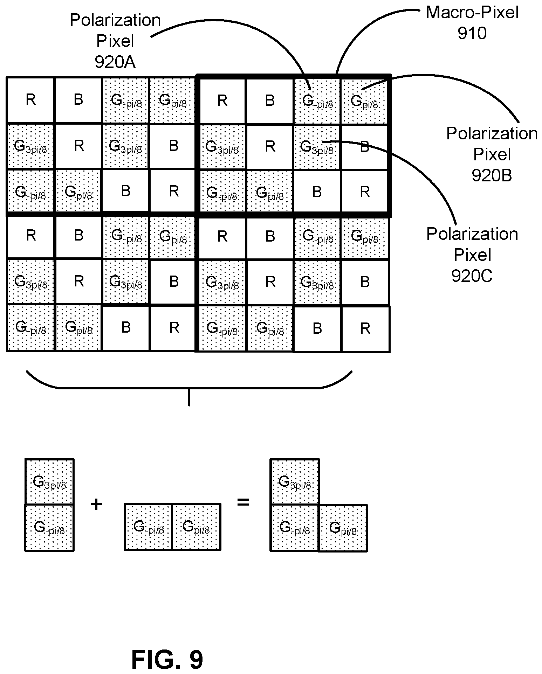

FIG. 9 is an example layout of a portion of a polarization multi-channel sensor with sparse polarization pixels that use metasurfaces and each macro-pixel is configured to detect three different orientations of linearly polarized light, in accordance with one or more embodiments. The portion of the sensor illustrated includes four macro-pixels (e.g., macro-pixel 910) that have a same layout of pixels and polarization pixels. For example, the macro-pixel 410 includes a plurality of pixels configured to detect intensity of light in different color channels (e.g., red and blue), and two groups of polarization pixels 920A, 920B, and 920C (collectively referred to as polarization pixels 920) that each include a metasurface. The polarization pixel 920A is configured to detect intensity of light in the green color channel that is linearly polarized in a first direction ($-\pi/8$ or 22.5 degrees). The polarization pixel 420B is configured to detect intensity of light in the green color channel that is linearly polarized in a second direction ($\pi/8$ or 22.5 degrees). The polarization pixel 920C is configured to detect intensity of light in the green color channel that is linearly polarized in a third direction ($3\pi/8$ or 67.5 degrees). Note that, the macro-pixel 910 does not include any non-polarized green pixels. As noted above, the metasurfaces have negligible light loss, and $S_0$ can be found using detected intensities by adding detected intensities from polarization pixels 920A and 920C (orthogonal polarizations). The controller (e.g., the controller 230) may use the detected intensities to determine a property of an object in the same manner as described above with reference to, e.g., FIG. 4A.

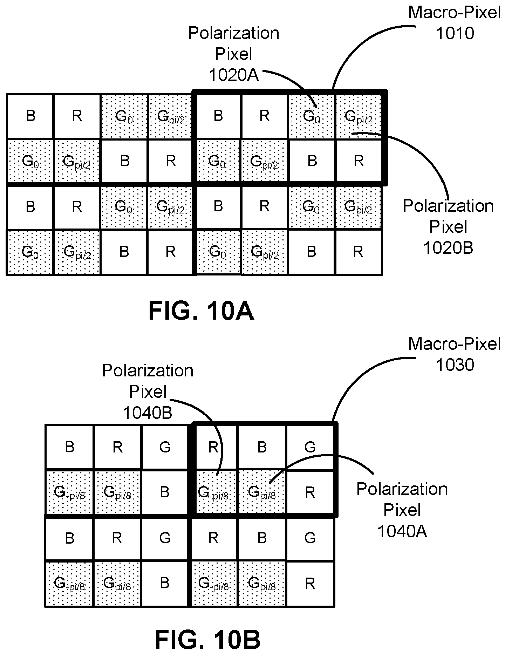

FIG. 10A is an example first layout of a portion of a polarization multi-channel sensor with sparse polarization pixels that use metasurfaces and each macro-pixel is configured to detect two different orientations of linearly polarized light, in accordance with one or more embodiments. The portion of the sensor illustrated includes four macro-pixels (e.g., macro-pixel 1010) that have a same layout of pixels and polarization pixels. For example, the macro-pixel 1010 includes a plurality of pixels configured to detect intensity of light in different color channels (e.g., red and blue), and two groups of polarization pixels 1020A and 1020B (collectively referred to as polarization pixels 1020). The polarization pixel 1020A is configured to detect intensity of light in the green color channel that is linearly polarized in a first direction ( 0 degrees). The polarization pixel 520B is configured to detect intensity of light in the green color channel that is linearly polarized in a second direction ($\pi/2$ or 90 degrees). As noted above, the metasurfaces have negligible light loss, and $S_0$ can be found using detected intensities by adding detected intensities from polarization pixels 1020A and 1020C (orthogonal polarizations).

The controller (e.g., the controller 230) may use the detected intensities to determine a property of an object based in part on the manner described above for FIG. 6. Note that the sum of polarization pixel 1020A and the polarization pixel 1020B give a same result as a non-polarized Green pixel (e.g., $A_G$).

FIG. 10B is an example second layout of a portion of a polarization multi-channel sensor with sparse polarization pixels that use metasurfaces and each macro-pixel is configured to detect two different orientations of linearly polarized light, in accordance with one or more embodiments. The portion of the sensor illustrated is similar to that in FIG. 10A in that it includes polarization pixels configured to detect two different orientations of linearly polarized light, except that each macro-pixel (e.g., macro-pixel 1030) includes polarization pixels 1040A and 1040B (collectively referred to as polarization pixels 1040) and it also includes a non-polarizing green pixel (to get $S_0$ information). The polarization pixel 1040A is configured to detect intensity of light in the green color channel that is linearly polarized in a first direction ($\pi/8$ or 22.5 degrees). The polarization pixel 1040B is configured to detect intensity of light in the green color channel that is linearly polarized in a second direction ($-\pi/8$ or -22.5 degrees). The controller (e.g., the controller 230) may determine the $S_0$, $S_1$, and $S_2$ Stokes parameters using equations (7) - (9) as described above with reference to FIG. 5A.

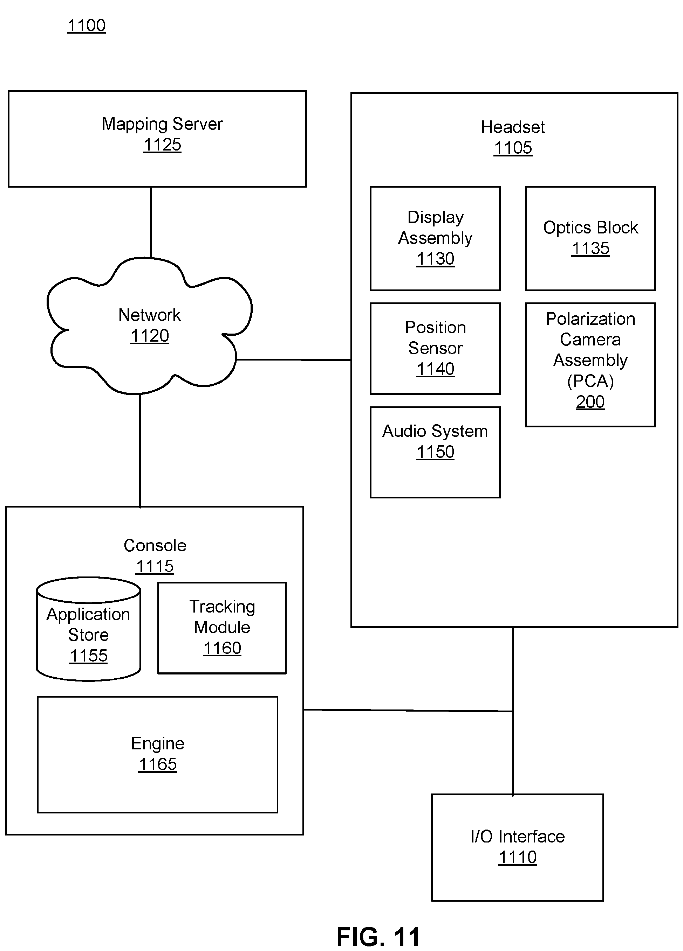

FIG. 11 is a system 1100 that includes a headset 1105, in accordance with one or more embodiments. In some embodiments, the headset 1105 may be the headset 100 of FIG. 1. The system 1100 may operate in an artificial reality environment (e.g., a virtual reality environment, an augmented reality environment, a mixed reality environment, or some combination thereof). The system 1100 shown by FIG. 11 includes the headset 1105, an input/output (I/O) interface 1110 that is coupled to a console 1115, the network 1120, and the mapping server 1125. While FIG. 11 shows an example system 1100 including one headset 1105 and one I/O interface 1110, in other embodiments any number of these components may be included in the system 1200. For example, there may be multiple headsets each having an associated I/O interface 1110, with each headset and I/O interface 1110 communicating with the console 1115. In alternative configurations, different and/or additional components may be included in the system 1100. Additionally, functionality described in conjunction with one or more of the components shown in FIG. 11 may be distributed among the components in a different manner than described in conjunction with FIG. 11 in some embodiments. For example, some or all of the functionality of the console 1115 may be provided by the headset 1105.

The headset 1105 includes the display assembly 1130, an optics block 1135, one or more position sensors 1140, and the PCA 200. Some embodiments of headset 1105 have different components than those described in conjunction with FIG. 11. Additionally, the functionality provided by various components described in conjunction with FIG. 11 may be differently distributed among the components of the headset 1105 in other embodiments, or be captured in separate assemblies remote from the headset 1105.

The display assembly 1130 displays content to the user in accordance with data received from the console 1115. The display assembly 1130 displays the content using one or more display elements (e.g., the display elements 120). A display element may be, e.g., an electronic display. In various embodiments, the display assembly 1130 comprises a single display element or multiple display elements (e.g., a display for each eye of a user). Examples of an electronic display include: a liquid crystal display (LCD), an organic light emitting diode (OLED) display, an active-matrix organic light-emitting diode display (AMOLED), a waveguide display, some other display, or some combination thereof. Note in some embodiments, the display element 120 may also include some or all of the functionality of the optics block 1135.

The optics block 1135 may magnify image light received from the electronic display, corrects optical errors associated with the image light, and presents the corrected image light to one or both eyeboxes of the headset 1105. In various embodiments, the optics block 1135 includes one or more optical elements. Example optical elements included in the optics block 1135 include: an aperture, a Fresnel lens, a convex lens, a concave lens, a filter, a reflecting surface, or any other suitable optical element that affects image light. Moreover, the optics block 1135 may include combinations of different optical elements. In some embodiments, one or more of the optical elements in the optics block 1135 may have one or more coatings, such as partially reflective or anti-reflective coatings.

Magnification and focusing of the image light by the optics block 1135 allows the electronic display to be physically smaller, weigh less, and consume less power than larger displays. Additionally, magnification may increase the field of view of the content presented by the electronic display. For example, the field of view of the displayed content is such that the displayed content is presented using almost all (e.g., approximately 110 degrees diagonal), and in some cases, all of the user's field of view. Additionally, in some embodiments, the amount of magnification may be adjusted by adding or removing optical elements.

In some embodiments, the optics block 1135 may be designed to correct one or more types of optical error. Examples of optical error include barrel or pincushion distortion, longitudinal chromatic aberrations, or transverse chromatic aberrations. Other types of optical errors may further include spherical aberrations, chromatic aberrations, or errors due to the lens field curvature, astigmatisms, or any other type of optical error. In some embodiments, content provided to the electronic display for display is pre-distorted, and the optics block 1135 corrects the distortion when it receives image light from the electronic display generated based on the content.

The position sensor 1140 is an electronic device that generates data indicating a position of the headset 1105. The position sensor 1140 generates one or more measurement signals in response to motion of the headset 1105. The position sensor 190 is an embodiment of the position sensor 1140. Examples of a position sensor 1140 include: one or more IMUs, one or more accelerometers, one or more gyroscopes, one or more magnetometers, another suitable type of sensor that detects motion, or some combination thereof. The position sensor 1140 may include multiple accelerometers to measure translational motion (forward/back, up/down, left/right) and multiple gyroscopes to measure rotational motion (e.g., pitch, yaw, roll). In some embodiments, an IMU rapidly samples the measurement signals and calculates the estimated position of the headset 1105 from the sampled data. For example, the IMU integrates the measurement signals received from the accelerometers over time to estimate a velocity vector and integrates the velocity vector over time to determine an estimated position of a reference point on the headset 1105. The reference point is a point that may be used to describe the position of the headset 1105. While the reference point may generally be defined as a point in space, however, in practice the reference point is defined as a point within the headset 1105.

The PCA 200 is configured to determine a property of an object in a local area of the headset 1105. Operation and structure of the PCA 200 is described above with regard to FIGs. 1-10B.

The audio system 1150 provides audio content to a user of the headset 1105. The audio system 1150 is substantially the same as the audio system describe above with reference to FIG. 1. The audio system 1150 may comprise one or acoustic sensors, one or more transducers, and an audio controller. The audio system 1150 may provide spatialized audio content to the user. In some embodiments, the audio system 1150 may request acoustic parameters from the mapping server 1125 over the network 1120. The acoustic parameters describe one or more acoustic properties (e.g., room impulse response, a reverberation time, a reverberation level, etc.) of the local area. The audio system 1150 may provide information describing at least a portion of the local area from e.g., the PCA 200 and/or location information for the headset 1105 from the position sensor 1140. The audio system 1150 may generate one or more sound filters using one or more of the acoustic parameters received from the mapping server 1125, and use the sound filters to provide audio content to the user.

The I/O interface 1110 is a device that allows a user to send action requests and receive responses from the console 1115. An action request is a request to perform a particular action. For example, an action request may be an instruction to start or end capture of image or video data, or an instruction to perform a particular action within an application. The I/O interface 1110 may include one or more input devices. Example input devices include: a keyboard, a mouse, a game controller, or any other suitable device for receiving action requests and communicating the action requests to the console 1115. An action request received by the I/O interface 1110 is communicated to the console 1115, which performs an action corresponding to the action request. In some embodiments, the I/O interface 1110 includes an IMU that captures calibration data indicating an estimated position of the I/O interface 1110 relative to an initial position of the I/O interface 1110. In some embodiments, the I/O interface 1110 may provide haptic feedback to the user in accordance with instructions received from the console 1115. For example, haptic feedback is provided when an action request is received, or the console 1115 communicates instructions to the I/O interface 1110 causing the I/O interface 1110 to generate haptic feedback when the console 1115 performs an action.

The console 1115 provides content to the headset 1105 for processing in accordance with information received from one or more of: the PCA 200, the headset 1105, and the I/O interface 1110. In the example shown in FIG. 11, the console 1115 includes an application store 1155, a tracking module 1160, and an engine 1165. Some embodiments of the console 1115 have different modules or components than those described in conjunction with FIG. 11. Similarly, the functions further described below may be distributed among components of the console 1115 in a different manner than described in conjunction with FIG. 11. In some embodiments, the functionality discussed herein with respect to the console 1115 may be implemented in the headset 1105, or a remote system.

The application store 1155 stores one or more applications for execution by the console 1115. An application is a group of instructions, that when executed by a processor, generates content for presentation to the user. Content generated by an application may be in response to inputs received from the user via movement of the headset 1105 or the I/O interface 1110. Examples of applications include: gaming applications, conferencing applications, video playback applications, or other suitable applications.

The tracking module 1160 tracks movements of the headset 1105 or of the I/O interface 1110 using information from the PCA 200, the one or more position sensors 1140, or some combination thereof. For example, the tracking module 1160 determines a position of a reference point of the headset 1105 in a mapping of a local area based on information from the headset 1105. The tracking module 1160 may also determine positions of an object or virtual object. Additionally, in some embodiments, the tracking module 1160 may use portions of data indicating a position of the headset 1105 from the position sensor 1140 as well as representations of the local area from the PCA 200 to predict a future location of the headset 1105. The tracking module 1160 provides the estimated or predicted future position of the headset 1105 or the I/O interface 1110 to the engine 1165.

The engine 1165 executes applications and receives position information, acceleration information, velocity information, predicted future positions, or some combination thereof, of the headset 1105 from the tracking module 1160. Based on the received information, the engine 1165 determines content to provide to the headset 1105 for presentation to the user. For example, if the received information indicates that the user has looked to the left, the engine 1165 generates content for the headset 1105 that mirrors the user's movement in a virtual local area or in a local area augmenting the local area with additional content. Additionally, the engine 1165 performs an action within an application executing on the console 1115 in response to an action request received from the I/O interface 1110 and provides feedback to the user that the action was performed. The provided feedback may be visual or audible feedback via the headset 1105 or haptic feedback via the I/O interface 1110.

The network 1120 couples the headset 1105 and/or the console 1115 to the mapping server 1125. The network 1120 may include any combination of local area and/or wide area networks using both wireless and/or wired communication systems. For example, the network 1120 may include the Internet, as well as mobile telephone networks. In one embodiment, the network 1120 uses standard communications technologies and/or protocols. Hence, the network 1120 may include links using technologies such as Ethernet, 802.11, worldwide interoperability for microwave access (WiMAX), 2G/3G/4G mobile communications protocols, digital subscriber line (DSL), asynchronous transfer mode (ATM), Infini-Band, PCI Express Advanced Switching, etc. Similarly, the networking protocols used on the network 1120 can include multiprotocol label switching (MPLS), the transmission control protocol/Internet protocol (TCP/IP), the User Datagram Protocol (UDP), the hypertext transport protocol (HTTP), the simple mail transfer protocol (SMTP), the file transfer protocol (FTP), etc. The data exchanged over the network 1120 can be represented using technologies and/or formats including image data in binary form (e.g., Portable Network Graphics (PNG)), hypertext markup language (HTML), extensible markup language (XML), etc. In addition, all or some of links can be encrypted using conventional encryption technologies such as secure sockets layer (SSL), transport layer security (TLS), virtual private networks (VPNs), Internet Protocol security (IPsec), etc.

The mapping server 1125 may include a database that stores a virtual model describing a plurality of spaces, wherein one location in the virtual model corresponds to a current configuration of a local area of the headset 1105. The mapping server 1125 receives, from the headset 1105 via the network 1120, information describing at least a portion of the local area and/or location information for the local area. The user may adjust privacy settings to allow or prevent the headset 1105 from transmitting information to the mapping server 1125. The mapping server 1125 determines, based on the received information and/or location information, a location in the virtual model that is associated with the local area of the headset 1105. The mapping server 1125 determines (e.g., retrieves) one or more acoustic parameters associated with the local area, based in part on the determined location in the virtual model and any acoustic parameters associated with the determined location. The mapping server 1125 may transmit the location of the local area and any values of acoustic parameters associated with the local area to the headset 1105.

One or more components of system 1100 may contain a privacy module that stores one or more privacy settings for user data elements. The user data elements describe the user or the headset 1105. For example, the user data elements may describe a physical characteristic of the user, an action performed by the user, a location of the user of the headset 1105, a location of the headset 1105, an HRTF for the user, etc. Privacy settings (or "access settings") for a user data element may be stored in any suitable manner, such as, for example, in association with the user data element, in an index on an authorization server, in another suitable manner, or any suitable combination thereof.

A privacy setting for a user data element specifies how the user data element (or particular information associated with the user data element) can be accessed, stored, or otherwise used (e.g., viewed, shared, modified, copied, executed, surfaced, or identified). In some embodiments, the privacy settings for a user data element may specify a "blocked list" of entities that may not access certain information associated with the user data element. The privacy settings associated with the user data element may specify any suitable granularity of permitted access or denial of access. For example, some entities may have permission to see that a specific user data element exists, some entities may have permission to view the content of the specific user data element, and some entities may have permission to modify the specific user data element. The privacy settings may allow the user to allow other entities to access or store user data elements for a finite period of time.

The privacy settings may allow a user to specify one or more geographic locations from which user data elements can be accessed. Access or denial of access to the user data elements may depend on the geographic location of an entity who is attempting to access the user data elements. For example, the user may allow access to a user data element and specify that the user data element is accessible to an entity only while the user is in a particular location. If the user leaves the particular location, the user data element may no longer be accessible to the entity. As another example, the user may specify that a user data element is accessible only to entities within a threshold distance from the user, such as another user of a headset within the same local area as the user. If the user subsequently changes location, the entity with access to the user data element may lose access, while a new group of entities may gain access as they come within the threshold distance of the user.

The system 1100 may include one or more authorization/privacy servers for enforcing privacy settings. A request from an entity for a particular user data element may identify the entity associated with the request and the user data element may be sent only to the entity if the authorization server determines that the entity is authorized to access the user data element based on the privacy settings associated with the user data element. If the requesting entity is not authorized to access the user data element, the authorization server may prevent the requested user data element from being retrieved or may prevent the requested user data element from being sent to the entity. Although this disclosure describes enforcing privacy settings in a particular manner, this disclosure contemplates enforcing privacy settings in any suitable manner.

Additional Configuration Information

The foregoing description of the embodiments has been presented for illustration; it is not intended to be exhaustive or to limit the patent rights to the precise forms disclosed. Persons skilled in the relevant art can appreciate that many modifications and variations are possible considering the above disclosure.

Some portions of this description describe the embodiments in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

Any of the steps, operations, or processes described herein may be performed or implemented with one or more hardware or software modules, alone or in combination with other devices. In one embodiment, a software module is implemented with a computer program product comprising a computer-readable medium containing computer program code, which can be executed by a computer processor for performing any or all the steps, operations, or processes described.

Embodiments may also relate to an apparatus for performing the operations herein. This apparatus may be specially constructed for the required purposes, and/or it may comprise a general-purpose computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Embodiments may also relate to a product that is produced by a computing process described herein. Such a product may comprise information resulting from a computing process, where the information is stored on a non-transitory, tangible computer readable storage medium and may include any embodiment of a computer program product or other data combination described herein.

Finally, the language used in the specification has been principally selected for readability and instructional purposes, and it may not have been selected to delineate or circumscribe the patent rights. It is therefore intended that the scope of the patent rights be limited not by this detailed description, but rather by any claims that issue on an application based hereon. Accordingly, the disclosure of the embodiments is intended to be illustrative, but not limiting, of the scope of the patent rights, which is set forth in the following claims.

**Claims**

1. A sensor comprising:
   a plurality of macro-pixels, where each macro pixel includes:

   a plurality of pixels configured to detect intensity of light in different color channels, the plurality of pixels including a first pixel configured to detect intensity of light in a first color channel, of the different color channels, and
   a first polarization pixel configured to detect intensity of light in the first color channel that is linearly polarized in a first direction,
   wherein light incident on a macro-pixel, of the plurality of macro-pixels, is from an object, and a controller is configured to determine a property of the object based in part on a first intensity signal of a first pixel of the macro-pixel and a first polarization signal of a first polarization pixel of the macro-pixel.

2. The sensor of claim 1, where each macro-pixel further comprises:

   a second polarization pixel configured to detect intensity of light in the first color channel that is linearly polarized in a second direction that is different than the first direction,
   wherein the determination of the property of the object is further based in part on a second polarization signal of a second polarization pixel of the macro-pixel.

3. The sensor of claim 2, wherein an angle separating the first direction and the second direction is forty five degrees, and optionally where
   each macro-pixel further comprises:

   a third polarization pixel configured to detect intensity of light in the first color channel that is linearly polarized in a third direction, wherein an angle separating the first direction and the third direction is 67.5 degrees,
   wherein the determination of the property of the object is further based in part on a third polarization signal of a third polarization pixel of the macro-pixel.

4. The sensor of claim 2, wherein:

   the macro-pixel is sequentially illuminated with light of a first polarization and light of a second polarization that are both in the first color channel, and an angle between the light of the first polarization and the light of the second polarization is 45 degrees,
   or

   a controller is configured to:

   for the macro-pixel,
   determine values of Stokes parameters S0, S1, and S2 using the first intensity signal, the first polarization signal, and the second polarization signal,
   wherein the property of the object is based in part on the determined values,
   or
   an angle separating the first direction and the second direction is 90 degrees, where each macro-pixel further comprises:

a third polarization pixel configured to detect intensity of light in the first color channel that is linearly polarized in a third direction, wherein the third direction is -45 degrees relative to the first direction; and
a fourth polarization pixel configured to detect intensity of light in the first color channel that is linearly polarized in a fourth direction, wherein the fourth direction is +45 degrees relative to the first direction;
wherein the property of the object is based in part on a third polarization signal of a third polarization pixel of the macro-pixel and a fourth polarization signal of a fourth polarization pixel of the macro-pixel.

5. The sensor of any of claims 2 to 4, wherein for the macro-pixel, the first polarizing pixel and the second polarizing pixel include a metasurface that directs light that is linearly polarized in the first direction to the first polarizing pixel and light that is linearly polarized in the second direction to the second polarizing pixel.

6. The sensor of any preceding claim, wherein the property of the object is selected from a group comprising: shape, position, and one or more material properties, where a material property is selected from a group comprising roughness, and diffuse albedo, and optionally wherein the macro-pixel is illuminated with light of a first polarization, and a controller is configured to:

   determine a degree of linear polarization (DOLP) using the first intensity signal,
   wherein the property of the object is further based in part on the determined DOLP.

7. A system comprising:
   a camera including a plurality of macro-pixels that receive light from a local area that includes an object, wherein a macro-pixel, of the plurality of macro-pixels includes:

   a plurality of pixels configured to detect intensity of light in different color channels, the plurality of pixels including a first pixel configured to detect intensity of light in a first color channel, of the different color channels, as a first intensity signal, and
   a first polarization pixel configured to detect intensity of light in the first color channel that is linearly polarized in a first direction as a first polarization signal, and
   a controller configured to determine a property of the object based in part on the first intensity signal and the first polarization signal.

8. The system of claim 7, where the macro-pixel further comprises:

   a second polarization pixel configured to detect intensity of light in the first color channel that is linearly polarized in a second direction that is different than the first direction,
   wherein the determination of the property of the object is also based in part on a second polarization signal of a second polarization pixel of the macro-pixel.

9. The system of claim 8, wherein an angle separating the first direction and the second direction is 45 degrees, and optionally where the macro-pixel further comprises:

   a third polarization pixel configured to detect intensity of light in the first color channel that is linearly polarized in a third direction, wherein an angle separating the first direction and the third direction is 67.5 degrees,
   wherein the determination of the property of the object is further based in part on a third polarization signal of a third polarization pixel of the macro-pixel.

10. The system of claim 8, further comprising:

    a projector configured to sequentially illuminate the object with light of a first polarization and light of a second polarization that are both in the first color channel and an angle between the light of the first polarization and the light of the second polarization is 45 degrees,
    wherein a portion of the light of the first polarization and a portion of the light of the second polarization reflected by the object are incident on the macro-pixel.

11. The system of claim 10, wherein the controller is configured to:

    for the macro-pixel,
    determine values of Stokes parameters S0, S1, and S2 using the first intensity signal, the first polarization signal, and the second polarization signal,
wherein the property of the object is further based in part on the determined values.

12. The system of claim 8, wherein an angle separating the first direction and the second direction is 90 degrees, wherein the macro-pixel further comprises:

> a third polarization pixel configured to detect intensity of light in the first color channel that is linearly polarized in a third direction, wherein the third direction is -45 degrees relative to the first direction; and
> a fourth polarization pixel configured to detect intensity of light in the first color channel that is linearly polarized in a fourth direction, wherein the fourth direction is +45 degrees relative to the first direction;
> wherein the property of the object is further based in part on a third polarization signal of a third polarization pixel of the macro-pixel and a fourth polarization signal of a fourth polarization pixel of the macro-pixel.

13. The system of claim 8, wherein for the macro-pixel, the first polarizing pixel and the second polarizing pixel include a metasurface that directs light that is linearly polarized in the first direction to the first polarizing pixel and light that is linearly polarized in the second direction to the second polarizing pixel.

14. A sensor comprising:
a plurality of macro-pixels, where each macro pixel includes:

> a plurality of pixels configured to detect intensity of light in different color channels, and
> a first polarization pixel configured to detect intensity of light in a first color channel of the different color channels that is linearly polarized in a first direction,
> wherein light incident on a macro-pixel, of the plurality of macro-pixels, is from an object, and a controller is configured to determine a property of the object based in part on a first polarization signal of a first polarization pixel of the macro-pixel.

15. The sensor of claim 14, wherein for the macro-pixel, the first polarizing pixel includes a metasurface that directs light that is linearly polarized in the first direction to the first polarizing pixel and light that is linearly polarized in a second direction to a second polarizing pixel.

Headset 100

Frame 110

Speaker 160

Acoustic Sensor 180

Display Element 120

Position Sensor 190

Polarized Camera Assembly 140

FIG. 1

FIG. 2

**FIG. 3A**

**FIG. 3B**

**FIG. 3C**

Polarization
Pixel
420A

Macro-Pixel
410

| B | B | G | G | B | B | G | G |
|---|---|---|---|---|---|---|---|
| B | B | G | G | B | B | G | G |
| $G_{pi/8}$ | G | R | R | $G_{pi/8}$ | G | R | R |
| $G_{-pi/8}$ | $G_{3pi/8}$ | R | R | $G_{-pi/8}$ | $G_{3pi/8}$ | R | R |
| B | B | G | G | B | B | G | G |
| B | B | G | G | B | B | G | G |
| $G_{pi/8}$ | G | R | R | $G_{pi/8}$ | G | R | R |
| $G_{-pi/8}$ | $G_{3pi/8}$ | R | R | $G_{-pi/8}$ | $G_{3pi/8}$ | R | R |

Polarization
Pixel
420B

Polarization
Pixel
420C

**FIG. 4A**

Macro-Pixel
440

Polarization
Pixel
420A

Polarization
Pixel
420B

Polarization
Pixel
420C

| B | G | B | G | B | G |
|---|---|---|---|---|---|
| $G_{pi/8}$ | R | $G_{pi/8}$ | R | $G_{3pi/8}$ | R |
| B | G | B | G | B | G |
| $G_{-pi/8}$ | R | $G_{3pi/8}$ | R | $G_{pi/8}$ | R |
| B | G | B | G | B | G |
| $G_{3pi/8}$ | R | $G_{pi/8}$ | R | $G_{-pi/8}$ | R |

**FIG. 4C**

| R | B | G | R | B | G |
|---|---|---|---|---|---|
| $G_{pi/8}$ | G | R | $G_{pi/8}$ | G | R |
| $G_{-pi/8}$ | $G_{3pi/8}$ | B | $G_{-pi/8}$ | $G_{3pi/8}$ | B |
| R | B | G | R | B | G |
| $G_{pi/8}$ | G | R | $G_{pi/8}$ | G | R |
| $G_{-pi/8}$ | $G_{3pi/8}$ | B | $G_{-pi/8}$ | $G_{3pi/8}$ | B |

Macro-Pixel
430

**FIG. 4B**

EP 4 563 955 A1

Polarization
Pixel
520B

Macro-Pixel
510

Polarization
Pixel
520A

| B | B | G | G | B | B | G | G |
|---|---|---|---|---|---|---|---|
| B | B | G | G | B | B | G | G |
| G | G_pi/8 | R | R | G | G_pi/8 | R | R |
| G_pi/8 | G | R | R | G_pi/8 | G | R | R |
| B | B | G | G | B | B | G | G |
| B | B | G | G | B | B | G | G |
| G | G_pi/8 | R | R | G | G_pi/8 | R | R |
| G_pi/8 | G | R | R | G_pi/8 | G | R | R |

**FIG. 5A**

Polarization
Pixel
520B

Macro-Pixel
540

Polarization
Pixel
520A

| B | G | B | G | B | G | B | G |
|---|---|---|---|---|---|---|---|
| G_pi/8 | R | G_pi/8 | R | G_pi/8 | R | G_pi/8 | R |
| B | G | B | G | B | G | B | G |
| G_pi/8 | R | G_pi/8 | R | G_pi/8 | R | G_pi/8 | R |
| B | G | B | G | B | G | B | G |
| G_pi/8 | R | G_pi/8 | R | G_pi/8 | R | G_pi/8 | R |
| B | G | B | G | B | G | B | G |
| G_pi/8 | R | G_pi/8 | R | G_pi/8 | R | G_pi/8 | R |

**FIG. 5C**

Macro-Pixel
530

| B | R | G | R | B | R |
|---|---|---|---|---|---|
| G | G_pi/8 | R | G | G_pi/8 | B |
| G_pi/8 | G | B | G_pi/8 | G | R |
| R | B | G | R | B | G |
| G | G_pi/8 | B | G | G_pi/8 | R |
| G_pi/8 | G | R | G_pi/8 | G | B |

**FIG. 5B**

EP 4 563 955 A1

**Projected Light**

**Sensor**

Macro-Pixel
610

Polarization
Pixel
620

Horizontal polarization

| B | G | B | G |
|---|---|---|---|
| $G_0$ | R | $G_0$ | R |
| B | G | B | G |
| $G_0$ | R | $G_0$ | R |

**FIG.6**

(1)

(2)

0 deg polarization

-45 deg polarization

—————730A—————▶

730B

2 time-sequential illuminations (1) and (2):

Macro-Pixel
710

Polarization
Pixel
720B

Polarization
Pixel
720A

| R | B | G | R | B | G |
| G | G$_{pi/4}$ | R | G | G$_{pi/4}$ | R |
| G$_0$ | G | B | G$_0$ | G | B |
| R | B | G | R | B | G |
| G | G$_{pi/4}$ | R | G | G$_{pi/4}$ | R |
| G$_0$ | G | B | G$_0$ | G | B |

**FIG.7A**

EP 4 563 955 A1

FIG.7B

FIG.7C

**FIG.8A**

**FIG.8B**

**FIG. 8C**

Polarization
Pixel
920A

Macro-Pixel
910

Polarization
Pixel
920B

Polarization
Pixel
920C

| R | B | G$_{pi/8}$ | G$_{pi/8}$ | R | B | G$_{pi/8}$ | G$_{pi/8}$ |
| G$_{3pi/8}$ | R | G$_{3pi/8}$ | B | G$_{3pi/8}$ | R | G$_{3pi/8}$ | B |
| G$_{pi/8}$ | G$_{pi/8}$ | B | R | G$_{pi/8}$ | G$_{pi/8}$ | B | R |
| R | B | G$_{pi/8}$ | G$_{pi/8}$ | R | B | G$_{pi/8}$ | G$_{pi/8}$ |
| G$_{3pi/8}$ | R | G$_{3pi/8}$ | B | G$_{3pi/8}$ | R | G$_{3pi/8}$ | B |
| G$_{pi/8}$ | G$_{pi/8}$ | B | R | G$_{pi/8}$ | G$_{pi/8}$ | B | R |

G$_{3pi/8}$
G$_{pi/8}$ + G$_{pi/8}$ G$_{pi/8}$ = G$_{3pi/8}$ G$_{pi/8}$ G$_{pi/8}$

**FIG. 9**

FIG. 10A

FIG. 10B

1100

Mapping Server
1125

Network
1120

Headset
1105

Display Assembly
1130

Optics Block
1135

Position Sensor
1140

Polarization Camera Assembly (PCA)
200

Audio System
1150

Console
1115

Application Store
1155

Tracking Module
1160

Engine
1165

I/O Interface
1110

FIG. 11

**EUROPEAN SEARCH REPORT**

Application Number

EP 24 19 1375

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2006 254331 A (FUJI PHOTO FILM CO LTD) 21 September 2006 (2006-09-21) * figure 1 * * paragraphs [0004], [0007], [0008] * | 1,7,14 | INV. G01J3/02 G01J3/10 G01J3/447 G01J4/04 |
| X | US 2021/389184 A1 (KONDO YOSHIKAZU [JP]) 16 December 2021 (2021-12-16) | 1-3,6-9, 14 | |
| Y | * figures 30, 34 * * paragraphs [0002], [0287] * | 3,5, 9-11,13, 15 | |
| Y | US 7 760 256 B2 (PANASONIC CORP [JP]) 20 July 2010 (2010-07-20) * column 14 - column 15 * | 3,9 | |
| X | TEPPEI KURITA ET AL: "Simultaneous Acquisition of High Quality RGB Image and Polarization Information using a Sparse Polarization Sensor", ARXIV.ORG, CORNELL UNIVERSITY LIBRARY, 201 OLIN LIBRARY CORNELL UNIVERSITY ITHACA, NY 14853, 27 September 2022 (2022-09-27), XP091327815, | 1-4,6-9, 12,14 | TECHNICAL FIELDS SEARCHED (IPC) G01J |
| Y | * page 1; figure 1 * * Sections 1, 3.1, 3.2, 5 * | 5,13,15 | |
| Y | US 2023/314827 A1 (DEVLIN ROBERT C [US] ET AL) 5 October 2023 (2023-10-05) * figure 36B * * paragraph [0169] * | 5,10,11, 13,15 | |
| Y | US 2021/333150 A1 (MCELDOWNEY SCOTT CHARLES [US] ET AL) 28 October 2021 (2021-10-28) * paragraph [0147] - paragraph [0151] * | 10,11 | |

The present search report has been drawn up for all claims

| Place of search | Date of completion of the search | Examiner |
|---|---|---|
| Munich | 22 November 2024 | Parise, Berengere |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                              
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 1375

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2024

| Patent document cited in search report | | Publication date | Patent family member(s) | | Publication date |
|---|---|---|---|---|---|
| JP 2006254331 | A | 21-09-2006 | NONE | | |
| US 2021389184 | A1 | 16-12-2021 | JP | 2020080366 A | 28-05-2020 |
| | | | US | 2021389184 A1 | 16-12-2021 |
| | | | WO | 2020100431 A1 | 22-05-2020 |
| US 7760256 | B2 | 20-07-2010 | CN | 101584222 A | 18-11-2009 |
| | | | CN | 102316329 A | 11-01-2012 |
| | | | EP | 2034743 A1 | 11-03-2009 |
| | | | EP | 3828519 A2 | 02-06-2021 |
| | | | JP | 4235252 B2 | 11-03-2009 |
| | | | JP | 4787871 B2 | 05-10-2011 |
| | | | JP | 2009055624 A | 12-03-2009 |
| | | | JP | WO2008149489 A1 | 19-08-2010 |
| | | | US | 2009290039 A1 | 26-11-2009 |
| | | | WO | 2008149489 A1 | 11-12-2008 |
| US 2023314827 | A1 | 05-10-2023 | US | 2023314827 A1 | 05-10-2023 |
| | | | US | 2024210715 A1 | 27-06-2024 |
| | | | WO | 2024205646 A2 | 03-10-2024 |
| US 2021333150 | A1 | 28-10-2021 | CN | 115516283 A | 23-12-2022 |
| | | | EP | 4139641 A1 | 01-03-2023 |
| | | | TW | 202201950 A | 01-01-2022 |
| | | | US | 2021333150 A1 | 28-10-2021 |
| | | | WO | 2021217103 A1 | 28-10-2021 |

EPO FORM P0459

For more details about this annex : see Official Journal of the European Patent Office, No. 12/82